(19) Europäisches Patentamt
European Patent Office
Office européen des brevets

(11) **EP 3 378 715 B1**

(12) # EUROPEAN PATENT SPECIFICATION

(45) Date of publication and mention
of the grant of the patent:
**15.04.2020   Bulletin 2020/16**

(51) Int Cl.:
**B60T 8/17** *(2006.01)*     **B60T 8/26** *(2006.01)*

(21) Application number: **17820249.5**

(22) Date of filing: **29.06.2017**

(86) International application number:
**PCT/JP2017/023847**

(87) International publication number:
**WO 2018/003895 (04.01.2018 Gazette 2018/01)**

(54) **SADDLE-TYPE VEHICLE**

SATTELFAHRZEUG

VÉHICULE DU TYPE À SELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2016   JP 2016129263
22.07.2016   JP 2016144421
22.07.2016   JP 2016144440
31.10.2016   JP 2016213121**

(43) Date of publication of application:
**26.09.2018   Bulletin 2018/39**

(73) Proprietors:
• **Yamaha Hatsudoki Kabushiki Kaisha
Iwata-shi, Shizuoka 438-8501 (JP)**
• **Advics Co., Ltd.
Kariya-shi, Aichi 448-8688 (JP)**
Designated Contracting States:
**AL AT BE BG CH CY CZ DE DK EE ES FI GB GR
HR HU IE IS LI LT LU LV MC MK MT NL NO PL PT
RO RS SE SI SK SM TR**

(72) Inventors:
• **KASAI, Satoshi
Iwata-shi
Shizuoka 438-8501 (JP)**
• **MIZUTANI, Takaaki
Iwata-shi
Shizuoka 438-8501 (JP)**

• **FUKUDA, Tadashi
Iwata-shi
Shizuoka 438-8501 (JP)**
• **SEKI, Yoshimichi
Iwata-shi
Shizuoka 438-8501 (JP)**
• **HIGUCHI, Shoma
Iwata-shi
Shizuoka 438-8501 (JP)**
• **TERASAKA, Masato
Kariya-shi
Aichi 448-8688 (JP)**
• **USHIROZAKO, Shinji
Kariya-shi
Aichi 448-8688 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) References cited:
**EP-A1- 1 826 443     EP-A1- 2 487 080
EP-A1- 2 977 281     EP-A2- 1 566 540
EP-A2- 2 305 525     JP-A- H03 132 455
JP-A- 2011 105 289     JP-A- 2011 194 994
JP-A- 2015 182 685     US-A1- 2007 075 582**

EP 3 378 715 B1

**Description**

TECHNICAL FIELD

The present invention relates to a straddled vehicle.

BACKGROUND ART

In connection with a straddled vehicle such as a motorcycle, a brake hydraulic-pressure control device that activates an anti-lock brake system (ABS) using a pump or the like for increasing and reducing brake hydraulic pressure is known.

While the ABS is being activated, an increase or decrease in the brake hydraulic pressure caused by the pump or the like may push back the brake lever due to the hydraulic pressure, a phenomenon known as kickback. A bar-handle-based vehicle brake hydraulic-pressure control device has been proposed that prevents a kickback from acting on the brake lever by disconnecting the master cylinder from the wheel brake while the brake is being controlled by the ABS (see Patent Document 1, listed below).

PRIOR ART DOCUMENTS

PATENT DOCUMENTS

Patent Document 1: Japanese Patent No. 5335512

SUMMARY OF THE INVENTION

PROBLEMS TO BE SOLVED BY THE INVENTION

The inventors did research to find a brake hydraulic-pressure control device that may be employed in a straddled vehicle including a front-wheel braking operation element and a rear-wheel braking operation element and that is based on a technical idea different from those for brake hydraulic-pressure control devices that have been proposed.

An object of the present invention is to provide a straddled vehicle including a front-wheel braking operation element, a rear-wheel braking operation element and a brake hydraulic-pressure control device based on a technical idea different from those for brake hydraulic-pressure control devices that have been proposed.

MEANS FOR SOLVING THE PROBLEMS

Typically, a straddled vehicle includes a front-wheel braking operation element and a rear-wheel braking operation element. One may operate the front-wheel braking operation element to generate a braking force for the front wheel. Similarly, one may operate the rear-wheel braking operation element to generate a braking force for the rear wheel. Thus, the straddled vehicle includes a plurality of braking operation elements, where these braking operation elements may be operated to generate a braking force for the front wheel and a braking force for the rear wheel just as the rider desires.

As discussed above, when the ABS is activated, a kickback acts on the braking operation element. A bar-handle-based vehicle brake hydraulic-pressure control device has been proposed that disconnects the master cylinder from the wheel brake while the brake is being controlled by the ABS. This prevents a kickback from acting on the brake lever while the ABS is being activated. This conventional technique is based on the technical idea of disconnecting the master cylinder from the wheel brake.

In view of this, in connection with a brake hydraulic-pressure control device for a straddled vehicle including a front-wheel braking operation element and a rear-wheel braking operation element, the present inventors investigated into the feel experienced when these braking operation elements are operated.

During the research, they found a technical idea different from the conventional idea of disconnecting the master cylinder from the wheel brake while the ABS is being activated: using the arrangement of the brake hydraulic-pressure control device to change the rigidity feel experienced by the rider when operating the braking operation element. For example, based on the technical idea, the increase in the braking force during a region directly before the initiation of activation of the ABS may be controlled to be slowed down to change the rigidity feel experienced by the rider when operating the braking operation element during a region directly before the initiation of activation of the ABS.

More specifically, the inventors considered a straddled vehicle with the following construction: In a straddled vehicle, the front-wheel master cylinder is connected with the front-wheel wheel cylinder via a front-wheel brake fluid channel. The rear-wheel master cylinder is connected with the rear-wheel wheel cylinder via a rear-wheel brake fluid channel. The inventors considered a straddled vehicle in which the front-wheel brake fluid channel and the rear-wheel brake fluid channel are independent from each other. This straddled vehicle is provided with at least one of a front-wheel brake hydraulic-pressure control device that controls the brake hydraulic pressure acting on the front-wheel wheel cylinder and the rear-wheel brake hydraulic-pressure control device that controls the brake hydraulic pressure acting on the rear-wheel wheel cylinder.

The front-wheel brake hydraulic-pressure control device controls the brake hydraulic pressure of the front-wheel wheel cylinder based on the operation condition of the front-wheel braking operation element. The inventors considered controlling the brake hydraulic pressure by driving the front-wheel electric actuator. In this arrangement, the front-wheel brake hydraulic-pressure control device defines the correlation between the operation condition of the front-wheel braking operation element and the drive signal for controlling the brake hydraulic pressure of the front-wheel wheel cylinder. This correlation is used to generate a drive signal that is based on a detected operation condition of the front-wheel braking operation element. The drive signal drives the front-wheel electric actuator.

At this point, the inventors arrived at changing the correlation when a detected vehicle condition quantity has exceeded a threshold. They found that changing the correlation in this manner makes it possible to change the rigidity feel of the front-wheel braking operation element based on a change in the vehicle condition quantity. More specifically, the correlation is changed when the front-wheel braking operation element has been operated in the direction for increasing braking force and the vehicle condition quantity has exceeded a first front-wheel threshold. Here, the correlation is changed so as to reduce the amount of increase in the brake hydraulic pressure acting on the front-wheel wheel cylinder in relation to the amount of change per unit time in the operation amount of the front-wheel braking operation element. The inventors found that this slows down the increase in the braking force for the front wheel in relation to the front-wheel braking operation when the vehicle condition quantity has exceeded the threshold, thereby making it easier for the rider to hold the front-wheel braking operation element.

Based on these findings, the present inventors devised the following arrangements for a straddled vehicle having front-wheel and rear-wheel braking operation elements.

Claim 1)

A straddled vehicle according to claim 1 of the present invention includes a vehicle-body frame, a front wheel and a rear wheel supported by the vehicle-body frame, a front-wheel brake, a front-wheel braking operation element operable by a rider, a front-wheel master cylinder, a front-wheel brake fluid channel, a rear-wheel brake, a rear-wheel braking operation element operable by the rider, a rear-wheel master cylinder, and a rear-wheel brake fluid channel. The front-wheel brake is provided on the front wheel and includes a front-wheel wheel cylinder, and the front-wheel master cylinder for generating a braking force for the front wheel is actuated by an operation of the front-wheel braking operation element. The front-wheel brake fluid channel connects the front-wheel master cylinder and the front-wheel wheel cylinder. The rear-wheel brake is provided on the rear wheel and includes a rear-wheel wheel cylinder, and the rear-wheel master cylinder for generating a braking force for the rear wheel is actuated by an operation of the rear-wheel braking operation element. The rear-wheel brake fluid channel connects the rear wheel master cylinder and the rear-wheel wheel cylinder. The straddled vehicle includes at least one of a front-wheel brake hydraulic-pressure control device configured to control a brake hydraulic pressure acting on the front-wheel wheel cylinder actuated when the front-wheel braking operation element is operated and a rear-wheel brake hydraulic-pressure control device configured to control a brake hydraulic pressure acting on the rear-wheel wheel cylinder actuated when the rear-wheel braking operation element is operated. The front-wheel brake fluid channel is independent from the rear-wheel brake fluid channel. The front-wheel brake hydraulic-pressure control device further includes a front-wheel electric actuator, a front-wheel braking operation condition detection unit, a front-wheel drive signal generation unit, and a front-wheel vehicle condition quantity detection unit. The front-wheel electric actuator is driven electrically, and is provided on the front-wheel brake fluid channel for controlling a brake hydraulic pressure acting on the front-wheel wheel cylinder. The front-wheel braking operation condition detection unit detects an operation condition of the front-wheel braking operation element. The front-wheel drive signal generation unit defines a correlation between the operation condition of the front-wheel braking operation element and a drive signal for the front-wheel electric actuator, and generates a drive signal for driving the front-wheel electric actuator based on the operation condition of the front-wheel braking operation element detected by the front-wheel braking operation condition detection unit. The front-wheel vehicle condition quantity detection unit detects a vehicle condition quantity relating to a condition of the vehicle. The front-wheel drive signal generation unit includes a front-wheel correlation changing unit. When the front-wheel braking operation element has been operated in a direction for increasing braking force and the vehicle condition quantity detected by the front-wheel vehicle condition quantity detection unit has exceeded a first front-wheel threshold, the front-wheel correlation changing unit changes the correlation between the operation condition of the front-wheel braking operation element and the drive signal for the front-wheel electric actuator so as to reduce an amount of increase in the brake hydraulic pressure acting on the front-wheel wheel cylinder in relation to an amount of change per unit time in the operation amount of the front-wheel braking operation element.

The rear-wheel brake hydraulic-pressure control device further includes a rear-wheel electric actuator, a rear-wheel braking operation condition detection unit, a rear-wheel drive signal generation unit, and a rear-wheel vehicle condition quantity detection unit. The rear-wheel electric actuator is driven electrically, and is provided on the rear-wheel brake fluid channel for controlling a brake hydraulic pressure acting on the rear-wheel wheel cylinder. The rear-wheel braking operation condition detection unit detects an operation condition of the rear-wheel braking operation element. The rear-wheel drive signal generation unit defines a correlation between the operation condition of the rear-wheel braking operation element and a drive signal for the rear-wheel electric actuator, and generates a drive signal for driving the rear-wheel electric actuator based on the operation condition of the rear-wheel braking operation element detected by the rear-wheel braking operation condition detection unit. The rear-wheel vehicle condition quantity detection unit detects a vehicle condition quantity relating to a condition of the vehicle. The rear-wheel drive signal generation unit includes a rear-wheel correlation changing unit. When the rear-wheel braking operation element has been operated in a direction for increasing braking force and the vehicle condition quantity detected by the rear-wheel vehicle condition quantity detection unit has exceeded a first rear-wheel threshold, the rear-wheel correlation changing unit changes the correlation between the operation condition of the rear-wheel braking operation element and the drive signal for the rear-wheel electric actuator so as to reduce an amount of increase in the brake hydraulic pressure acting on the rear-wheel wheel cylinder in relation to an amount of change per unit time in the operation amount of the rear-wheel braking operation element.

That is, the straddled vehicle includes a brake hydraulic-pressure control device capable of controlling the brake hydraulic pressure acting on one wheel cylinder actuated when one of the front-wheel and rear-wheel braking operation elements has been operated. One brake fluid channel to which the one wheel cylinder is connected is independent from the other brake fluid channel. The brake hydraulic-pressure control device includes: an electric actuator, an electric actuator that is driven electrically and is provided on the one brake fluid channel and capable of controlling the brake hydraulic pressure acting on the one wheel cylinder, one braking operation condition detection unit, a drive signal generation unit, and a vehicle condition quantity detection unit.

The one braking operation condition detection unit detects the operation condition of the one braking operation element. The drive signal generation unit defines the relationship between the operation condition of the one braking operation element and the drive signal for the electric actuator, and generates a drive signal for driving the electric actuator depending on the operation condition of the one braking operation element detected by the one braking operation condition detection unit. The vehicle condition quantity detection unit detects a vehicle condition quantity relating to the condition of the vehicle. When the one braking operation element has been operated in the direction for increasing braking force and the vehicle condition quantity detected by the vehicle condition quantity detection unit has exceeded a predetermined threshold, the drive signal generation unit is configured to be capable of changing the relationship between the operation condition of the one braking operation element and the drive signal for the electric actuator depending on the operation condition of the one braking operation element detected by the one braking operation condition detection unit and the vehicle condition quantity detected by the vehicle condition quantity detection unit so as to reduce the amount of increase in the brake hydraulic pressure acting on the one wheel cylinder in relation to a unit operation amount of the one braking operation element.

In claim 1, when the one braking operation element has been operated in the direction for increasing braking force, the amount of increase in the brake hydraulic pressure acting on the one wheel cylinder in relation to a unit operation amount of the one braking operation element is reduced. This changes the operation feel experienced by the rider. This makes it easier for the rider to hold the one braking operation element. This provides a straddled vehicle including a front-wheel braking operation element, a rear-wheel braking operation element and a brake hydraulic-pressure control device based on a technical idea different from those for brake hydraulic-pressure control device that have been proposed.

Claim 2)

Starting from claim 1, the front-wheel correlation changing unit may set, to a first front-wheel increase amount, the amount of increase in the brake hydraulic pressure acting on the front-wheel wheel cylinder in relation to the amount of change per unit time in the operation amount of the front-wheel braking operation element when the front-wheel braking operation element has been operated in the direction for increasing braking force and the vehicle condition quantity detected by the front-wheel vehicle condition quantity detection unit has exceeded the first front wheel threshold. In such implementations, the front-wheel correlation changing unit may further set, to a second front-wheel increase amount smaller than the first front-wheel increase amount, the amount of increase in the brake hydraulic pressure acting on the front-wheel wheel cylinder in relation to the amount of change per unit time in the operation amount of the front-wheel braking operation element when the front-wheel braking operation element has been operated in the direction for increasing braking force and the vehicle condition quantity detected by the front-wheel vehicle condition quantity detection unit has exceeded a second front-wheel threshold larger than the first front-wheel threshold.

The front-wheel correlation changing unit sets, to a first front-wheel increase amount or a second front-wheel increase amount, the amount of increase in the brake hydraulic pressure acting on the front-wheel wheel cylinder in relation to the amount of change per unit time in the operation amount of the front-wheel braking operation element by changing the correlation. The first or second front-wheel increase amount may have a width. In claim 2, the front-wheel correlation changing unit changes the correlation when the vehicle condition quantity has exceeded the first front-wheel threshold, and changes the correlation when the vehicle condition quantity has exceeded the second front-wheel threshold. In each of these cases, the change in the correlation reduces the amount of increase in the brake hydraulic pressure acting on the front-wheel wheel cylinder in relation to the amount of change per unit time in the operation amount of the front-wheel braking operation element.

The rear-wheel correlation changing unit may set, to a first rear-wheel increase amount, the amount of increase in the brake hydraulic pressure acting on the rear-wheel wheel cylinder in relation to the amount of change per unit time in the operation amount of the rear-wheel braking operation element when the rear-wheel braking operation element has been operated in the direction for increasing braking force and the vehicle condition quantity detected by the rear-wheel vehicle condition quantity detection unit has exceeded the first rear wheel threshold. In such implementations, the rear-wheel correlation changing unit may further set, to a second rear-wheel increase amount smaller than the first rear-wheel increase amount, the amount of increase in the brake hydraulic pressure acting on the rear-wheel wheel cylinder in relation to the amount of change per unit time in the operation amount of the rear-wheel braking operation element when the rear-wheel braking operation element has been operated in the direction for increasing braking force and the vehicle condition quantity detected by the rear-wheel vehicle condition quantity detection unit has exceeded a second rear-wheel threshold larger than the first rear-wheel threshold.

The rear-wheel correlation changing unit sets, to a first rear-wheel increase amount or a second rear-wheel increase amount, the amount of increase in the brake hydraulic pressure acting on the rear-wheel wheel cylinder in relation to the amount of change per unit time in the operation amount of the rear-wheel braking operation element by changing the correlation. In Claim 2, the rear-wheel correlation changing unit changes the correlation when the vehicle condition quantity has exceeded the first rear-wheel threshold, and changes the correlation when the vehicle condition quantity has exceeded the second rear-wheel threshold. In each of these cases, the change in the correlation reduces the amount of increase in the brake hydraulic pressure acting on the rear-wheel wheel cylinder in relation to the amount of change per unit time in the operation amount of the rear-wheel braking operation element.

That is, in claim 2, when the one braking operation element has been operated in the direction for increasing braking force and the vehicle condition quantity detected by the vehicle condition quantity detection unit has exceeded a first threshold, the drive signal generation unit may set, to a first increase amount, the amount of increase in the brake hydraulic pressure acting on the one wheel cylinder in relation to a unit operation amount of the one braking operation element. Further, when the one braking operation element has been operated in the direction for increasing braking force and the vehicle condition quantity detected by the vehicle condition quantity detection unit has exceeded a second threshold larger than the first threshold, the drive signal generation unit may set, to a second increase amount smaller than the first increase amount, the amount of increase in the brake hydraulic pressure acting on the one wheel cylinder in relation to a unit operation amount of the one braking operation element.

(Claim 3)

Starting from claim 1 or 2, the vehicle condition quantity detected by the front-wheel vehicle condition quantity detection unit may include a physical quantity relating to a slip of the front wheel. For example, the front-wheel vehicle condition quantity detection unit may detect a slip ratio or slip amount of the front wheel as the physical quantity relating to the slip of the front wheel. The vehicle condition quantity detected by the rear-wheel vehicle condition quantity detection unit may include a physical quantity relating to a slip of the rear wheel. For example, the rear-wheel vehicle condition quantity detection unit may detect a slip ratio or slip amount of the rear wheel as the physical quantity relating to the slip of the rear wheel.

For example, the vehicle condition quantity may be the slip amount of one wheel on which the one wheel cylinder is provided, and the vehicle condition quantity detection unit may be one wheel slip amount detection unit that detects the slip amount of the one wheel.

(Claim 4)

Starting from one of claims 1 to 3, the front-wheel braking operation condition detection unit may detect a brake hydraulic pressure generated by the front-wheel master cylinder. When the front-wheel braking operation element has been operated in the direction for increasing braking force and the vehicle condition quantity detected by the front-wheel vehicle condition quantity detection unit has exceeded the first front-wheel threshold, the front-wheel brake hydraulic-pressure control device may drive the front-wheel electric actuator in such a manner that the brake hydraulic pressure acting on the front-wheel wheel cylinder becomes equal to or smaller than the brake hydraulic pressure of the front-wheel master cylinder detected by the front-wheel brake operation condition detection unit. The rear-wheel braking operation condition detection unit may detect a brake hydraulic pressure generated by the rear-wheel master cylinder. When the rear-wheel braking operation element has been operated in the direction for increasing braking force and the vehicle condition quantity detected by the rear-wheel vehicle condition quantity detection unit has exceeded the first rear-wheel threshold, the rear-wheel brake hydraulic-pressure control device may drive the rear-wheel electric actuator in such a manner that the brake hydraulic pressure acting on the rear-wheel wheel cylinder becomes equal to or smaller than the brake hydraulic pressure of the rear-wheel master cylinder detected by the rear-wheel braking operation condition detection unit.

Starting from claim 2, when the front-wheel braking operation element has been operated in the direction for increasing braking force and the vehicle condition quantity detected by the front-wheel vehicle condition quantity detection unit has exceeded the second front-wheel threshold, the front-wheel brake hydraulic-pressure control device may drive the front-wheel electric actuator in such a manner that the brake hydraulic pressure acting on the front-wheel wheel cylinder becomes equal to or smaller than the brake hydraulic pressure of the front-wheel master cylinder detected by the front-wheel braking operation condition detection unit. When the rear-wheel braking operation element has been operated in the direction for increasing braking force and the vehicle condition quantity detected by the rear-wheel vehicle condition quantity detection unit has exceeded the second rear-wheel threshold, the rear-wheel brake hydraulic-pressure control device may drive the rear-wheel electric actuator in such a manner that the brake hydraulic pressure acting on the rear-wheel wheel cylinder becomes equal to or smaller than the brake hydraulic pressure of the rear-wheel master cylinder detected by the rear-wheel braking operation condition detection unit.

That is, the one braking operation condition detection unit may be one master-cylinder brake hydraulic pressure detection unit that detects the brake hydraulic pressure generated by the one master cylinder actuated by the operation of the one braking operation element. When the one braking operation element has been operated in the direction for increasing braking force and the vehicle condition quantity detected by the vehicle condition quantity detection unit has exceeded a predetermined threshold, the brake hydraulic-pressure control device may drive the electric actuator in such a manner that the brake hydraulic pressure acting on the one wheel cylinder becomes equal to or smaller than the brake hydraulic pressure of the one master cylinder detected by the master cylinder brake hydraulic pressure detection unit.

(Claim 5)

Starting from one claims 1 to 4, the front-wheel brake hydraulic-pressure control device may drive the front-wheel electric actuator so as to reduce the brake hydraulic pressure acting on the front-wheel wheel cylinder when the front-wheel braking operation element has been operated in the direction for increasing braking force and the vehicle condition quantity detected by the front-wheel vehicle condition quantity detection unit has reached a third front-wheel threshold larger than the first front-wheel threshold. The rear-wheel brake hydraulic-pressure control device may drive the rear-wheel electric actuator so as to reduce the brake hydraulic pressure acting on the rear-wheel wheel cylinder when the rear-wheel braking operation element has been operated in the direction for increasing braking force and the vehicle condition quantity detected by the rear-wheel vehicle condition quantity detection unit has reached a third rear-wheel threshold larger than the first rear-wheel threshold. In Arrangement 5, for example, the vehicle condition quantity may be a physical quantity relating to the slip amount or slip ratio. The third front-wheel threshold may be an upper limit of the physical quantity relating to the slip of the front wheel. The third front-wheel threshold may be a value larger than the second front-wheel threshold. The third rear-wheel threshold may be an upper limit of the physical quantity relating to the slip of the rear wheel. The third rear-wheel threshold may be a value larger than the second rear-wheel threshold.

(Claim 6)

Starting from one of Arrangements 1 to 5, the straddled vehicle may include a bar handle supporting at least one of the front-wheel braking operation element and the rear-wheel braking operation element and configured to be capable of changing a direction of the front wheel.

That is, the straddled vehicle may include a handle on which at least one of the front-wheel and rear-wheel braking operation elements is supported and that is capable of changing the direction of the front wheel. The one braking operation element may be supported on the handle.

EFFECTS OF THE INVENTION

The present invention provides a straddled vehicle including a front-wheel braking operation element, a rear-wheel braking operation element and a brake hydraulic-pressure control device based on a technical idea different from those for the brake hydraulic-pressure control devices that have been proposed.

BRIEF DESCRIPTION OF THE DRAWINGS

[FIG. 1] FIG. 1 is a schematic side view of a motorcycle.
[FIG. 2] FIG. 2 schematically shows the construction of a brake system of Embodiment 1.
[FIG. 3A] FIG. 3A is a functional block diagram of the brake hydraulic-pressure control device for the front wheel.
[FIG. 3B] FIG. 3B is a functional block diagram of the brake hydraulic-pressure control device for the rear wheel.
[FIG. 4] FIG. 4 shows graphs of an example of control by the brake hydraulic-pressure control device.
[FIG. 5] FIG. 5 schematically shows the construction of a brake system of Embodiment 2.
[FIG. 6] FIG. 6 illustrates a straddled vehicle according to an embodiment.
[FIG. 7] FIG. 7 is a view of a wheel from above.

EMBODIMENTS FOR CARRYING OUT THE INVENTION

(Embodiment 1)

Embodiment 1 of the present invention will now be described with reference to the drawings. A motorcycle will be described as an example of the straddled vehicle of Embodiment 1. However, the straddled vehicle of the present invention is not limited to a motorcycle. Any number of front and rear wheels may be provided. For example, the straddled vehicle of the present invention may be a straddled vehicle with three or four wheels. In the following description, front/forward, rear(ward), left and right are directions with respect to the direction in which the motorcycle advances.

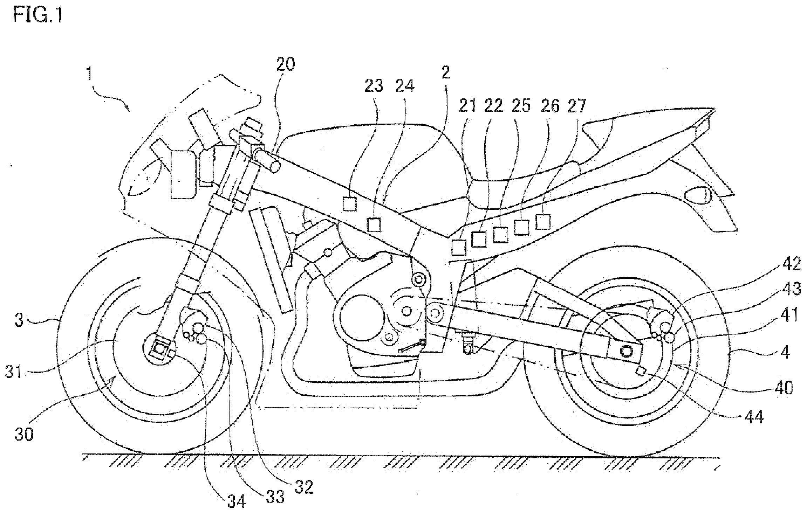

FIG. 1 is a schematic side view of the motorcycle. The motorcycle 1 includes a vehicle-body frame 2, a front wheel 3 and a rear wheel 4. The front wheel 3 is provided with a front-wheel brake 30 for generating a braking force for the front wheel 3. The rear wheel 4 is provided with a rear-wheel brake 40 for generating a braking force for the rear wheel 4. The front-wheel brake 30 is a disc brake generally composed of a front-wheel brake disc 31 and a front-wheel brake caliper 32. A front-wheel wheel cylinder 33 is provided on the front-wheel brake caliper 32. The rear-wheel brake 40 is a disc brake generally composed of a rear-wheel brake disc 41 and a rear-wheel brake caliper 42. A rear-wheel wheel cylinder 43 is provided on the rear-wheel brake caliper 42.

A bar handle 20 configured to be capable of changing the direction of the front wheel 3 is attached to the vehicle-body frame 2. An electronic control unit (ECU) 21 is provided on the vehicle-body frame 2 for controlling the operation of various parts of the motorcycle 1. The front wheel 3 is provided with a front-wheel wheel velocity sensor 34, while the rear wheel 4 is provided with a rear-wheel wheel velocity sensor 44.

Further, an inertial measurement unit (IMU) 22 is provided on the vehicle-body frame 2. The IMU 22 measures the acceleration and angular velocity of the vehicle. Further, on the vehicle-body frame 2 may be provided a gyro sensor 23, a longitudinal acceleration sensor 24, a vehicle-body velocity detection unit 25, a pitch angle detection unit 26, a roll angle detection unit 27, and other elements. The vehicle-body velocity detection unit 25 calculates the vehicle-body velocity of the motorcycle 1 based on the front-wheel wheel velocity detected by the front-wheel wheel velocity sensor 34 and the rear-wheel wheel velocity detected by the rear-wheel wheel velocity sensor 44. The pitch angle detection unit 26 receives the pitch rate of the motorcycle 1 from the gyro sensor 23. The pitch angle detection unit 26 detects the pitch angle of the motorcycle 1 based on the input pitch rate. The roll angle detection unit 27 receives the roll rate of the motorcycle 1 from the gyro sensor 23. The roll angle detection unit 27 detects the roll angle of the motorcycle 1 based on the input roll rate.

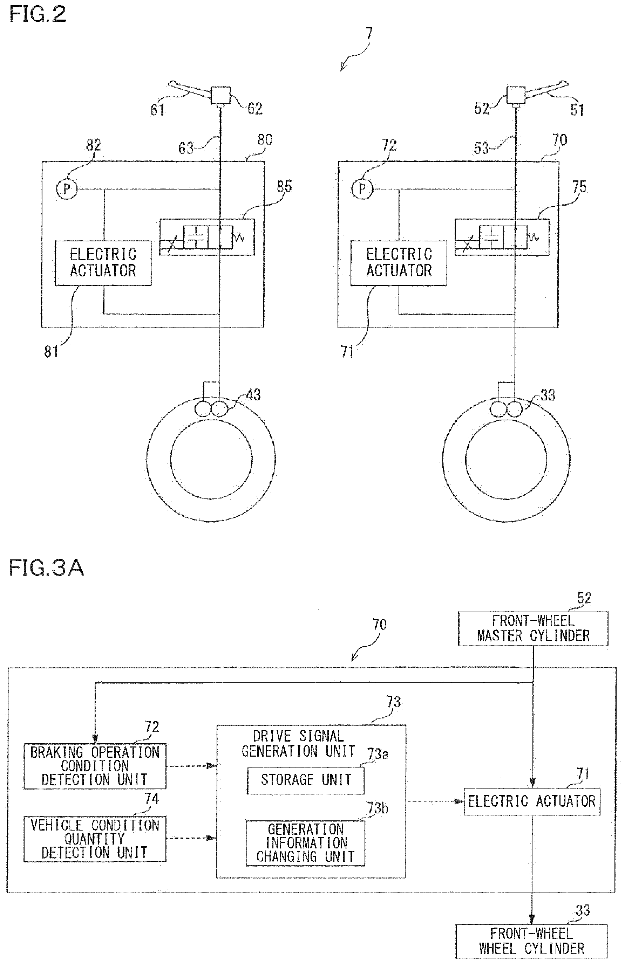

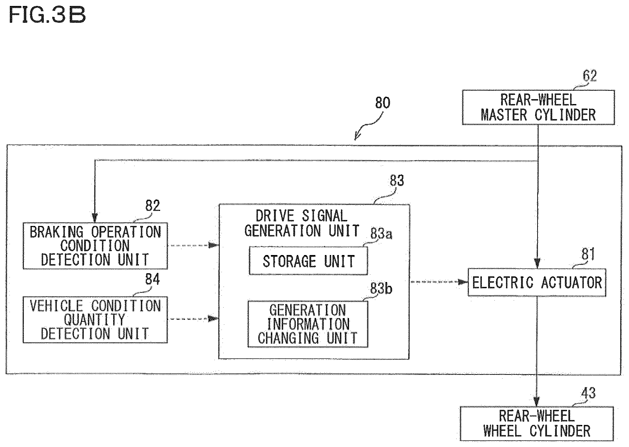

FIG. 2 schematically shows the construction of the brake system 7 of the motorcycle 1. FIGS. 3A and 3B are functional block diagrams of the front-wheel and rear-wheel brake hydraulic-pressure control devices 70 and 80 of the brake system 7. In FIGS. 3A and 3B, the hydraulic circuits are indicated by solid lines, while the electronic signal lines are indicated by broken lines.

The brake system 7 includes a front-wheel wheel cylinder 33 provided on the front wheel 3 and a rear-wheel wheel cylinder 43 provided on the rear wheel 4. The brake system 7 further includes a front-wheel braking operation element 51 and a rear-wheel braking operation element 61 configured to be operable by a rider driving the motorcycle 1. The present embodiment provides brake levers supported on the bar handle 20 as examples of the front-wheel and rear-wheel braking operation elements 51 and 61. However, the front-wheel and rear-wheel braking operation elements 51 and 61 are not limited to these forms. At least one of the rear-wheel and front wheel braking operation elements 61 and 51 may have the form of a brake pedal supported on the vehicle-body frame 2, for example.

The brake system 7 includes a front-wheel master cylinder 52 and a rear-wheel master cylinder 62. The front-wheel master cylinder 52 is coupled to the front-wheel braking operation element 51 for generating a brake hydraulic pressure depending on operation power applied by the rider to the front-wheel braking operation element 51. The rear-wheel master cylinder 62 is coupled to the rear-wheel braking operation element 61 for generating a brake hydraulic pressure depending on operation power applied by the rider to the rear-wheel braking operation element 61. The front-wheel master cylinder 52 is connected to the front-wheel wheel cylinder 33 via a front-wheel brake fluid channel 53. The rear-wheel master cylinder 62 is connected to the rear-wheel wheel cylinder 43 via a rear-wheel brake fluid channel 63. The front-wheel and rear-wheel brake fluid channels 53 and 63 are independent from each other.

The brake system 7 further includes a front-wheel brake hydraulic-pressure control device 70 and a rear-wheel brake hydraulic-pressure control device 80. The front-wheel brake hydraulic-pressure control device 70 is provided on the front-wheel brake fluid channel 53. The front-wheel brake hydraulic-pressure control device 70 controls the brake hydraulic pressure acting on the front-wheel wheel cylinder 33. The rear-wheel brake hydraulic-pressure control device 80 is provided on the rear-wheel brake fluid channel 63. The rear-wheel brake hydraulic-pressure control device 80 controls the brake hydraulic pressure acting on the rear-wheel wheel cylinder 43. A brake hydraulic-pressure control device may be provided on only one of the front-wheel and rear-wheel brake fluid channels 53 and 63.

The front-wheel brake hydraulic-pressure control device 70 includes a front-wheel electric actuator 71, a front-wheel braking operation condition detection unit 72, a front-wheel drive signal generation unit 73, and a front-wheel vehicle condition quantity detection unit 74. The front-wheel electric actuator 71 controls the brake hydraulic pressure acting on the front-wheel wheel cylinder 33. The front-wheel braking operation condition detection unit 72 detects the operation condition of the front-wheel braking operation element 51. The front-wheel drive signal generation unit 73 generates a drive signal for driving the front-wheel electric actuator 71. The front-wheel vehicle condition quantity detection unit 74 detects a vehicle condition quantity relating to the condition of the vehicle. The front-wheel brake hydraulic-pressure control device 70 may further include a front-wheel electric valve 75. The front-wheel electric valve 75 is provided on the front-wheel brake fluid channel 53 and switches the front-wheel brake fluid channel 53 to communicated and disconnected states. The electric valve 75 is provided between the front-wheel master cylinder 52 and the position at which the electric actuator 71 is connected to the brake fluid channel 53.

The front-wheel electric actuator 71 is driven electrically, and is provided on the front-wheel brake fluid channel 53. The front-wheel electric actuator 71 may be any device that is capable of electrically controlling the brake hydraulic pressure, and examples include electrically driven gear pumps, electrically driven trochoid pumps, electrically driven piston pumps (including swash plate pumps), and electrically driven master cylinders. Preferably, a pump with small hydraulic-pressure variations may be used.

The front-wheel braking operation condition detection unit 72 detects the operation condition of the front-wheel braking operation element 51. The front-wheel braking operation condition detection unit 72 may be, for example, a master-cylinder brake hydraulic pressure detection unit for detecting a brake hydraulic pressure generated by the front-wheel master cylinder 52 actuated by an operation of the front-wheel braking operation element 51. The master-cylinder brake hydraulic pressure detection unit may be a pressure sensor that detects a brake hydraulic pressure generated by the front-wheel master cylinder 52. The front-wheel braking operation condition detection unit 72 outputs a signal corresponding to the detected operation condition of the front-wheel braking operation element 51.

The front-wheel drive signal generation unit 73 defines the correlation between the operation condition of the front-wheel braking operation element 51 and the drive signal for the electric actuator 71. The front-wheel drive signal generation unit 73 uses the defined correlation to generate a drive signal for driving the electric actuator 71 based on the operation condition of the front-wheel braking operation element 51 detected by the braking operation condition detection unit 72.

The front-wheel drive signal generation unit 73 includes a storage unit 73a. The storage unit 73a stores front-wheel drive signal generation information. The front-wheel drive signal generation information defines the relationship between the operation condition of the front-wheel braking operation element 51 and the drive signal for the front-wheel electric actuator 71. The front-wheel drive signal generation information relates to, for example, the magnitude of the drive signal for the electric actuator 71 in relation to the operation amount of the front-wheel braking operation element 51.

Further, the front-wheel drive signal generation unit 73 includes a front-wheel generation information changing unit 73b. The front-wheel generation information changing unit 73b changes the front-wheel drive signal generation information stored in the storage unit 73a. The front-wheel generation information changing unit may be referred to as correlation changing unit.

The front-wheel vehicle condition quantity detection unit 74 is capable of detecting a vehicle condition quantity relating to the condition of the motorcycle 1. The vehicle condition quantity may be, for example, the acceleration and angular velocity of the vehicle, the slip amount of a wheel, the slip ratio of a wheel, skid acceleration, skid angle, roll angle, or pitch angle. The front-wheel vehicle condition quantity detection unit 74 may be constituted by, for example, at least one of the IMU 22, vehicle-body velocity detection unit 25, pitch angle detection unit 26 and roll angle detection unit 27.

The front-wheel drive signal generation unit 73 changes the correlation between the operation condition of the front-wheel braking operation element 51 and the drive signal for the electric actuator 71 when the front-wheel braking operation element 51 has been operated in the direction for increasing braking force and the vehicle condition quantity detected by the vehicle condition quantity detection unit 74 has exceeded a first front-wheel threshold. This change to the correlation is done based on the operation condition of the front-wheel braking operation element 51 detected by the braking operation condition detection unit 72 and the vehicle condition quantity detected by the vehicle condition quantity detection unit 74. The front-wheel drive signal generation unit 73 changes the correlation so as to reduce the amount of increase in the brake hydraulic pressure acting on the front-wheel wheel cylinder 33 in relation to the amount of change per unit time in the operation amount of the front-wheel braking operation element 51.

More specifically, when the front-wheel drive signal generation unit 73 receives, from the braking operation condition detection unit 72, information indicating that the front-wheel braking operation element 51 has been operated in the direction for increasing braking force and receives, from the vehicle condition quantity detection unit 74, information indicating that the vehicle condition quantity has exceeded a predetermined first front-wheel threshold, the front-wheel generation information changing unit 73b changes the correlation. Here, the front-wheel generation information changing unit 73b may change the front-wheel drive signal generation information so as to reduce the amount of increase in the brake hydraulic pressure acting on the front-wheel wheel cylinder 33 in relation to a unit operation amount of the front-wheel braking operation element 51.

Thus, when the front-wheel braking operation element 51 has been operated in the direction for increasing braking force, the amount of increase in the brake hydraulic pressure acting on the front-wheel wheel cylinder 33 in relation to a unit operation amount of the front-wheel braking operation element 51 decreases. This makes it easier for the rider to hold the front-wheel braking operation element 51.

The first front-wheel threshold of the present embodiment may be a value smaller than a threshold for activating control using signals from a conventional ABS or IMU. For example, the threshold for activating the ABS is typically a slip ratio of about 10 to 20 %. For example, if the vehicle-body velocity is 100 km/h, the ABS is activated when the wheel velocity is 90 to 80 km/h. The first front-wheel threshold for slip ratio of the present embodiment may be, for example, sufficiently smaller than 10 %; for example, it may be about 1 to 5 %.

When the front-wheel braking operation element 51 has been operated in the direction for increasing braking force and the vehicle condition quantity detected by the vehicle condition quantity detection unit 74 has exceeded the first front-wheel threshold, the front-wheel drive signal generation unit 73 may set, to a first increase amount, the amount of increase in the brake hydraulic pressure acting on the front-wheel wheel cylinder 33 in relation to a unit operation amount of the front-wheel braking operation element 51. In such implementations, when the front-wheel braking operation element 51 has been operated in the direction for increasing braking force and the vehicle condition quantity detected by the vehicle condition quantity detection unit 74 has exceeded a second front-wheel threshold that is larger than the first front-wheel threshold, the front-wheel drive signal generation unit 73 may set, to a second increase amount smaller than the first increase amount, the amount of increase in the brake hydraulic pressure acting on the front-wheel wheel cylinder 33 in relation to a unit operation amount of the front-wheel braking operation element 51.

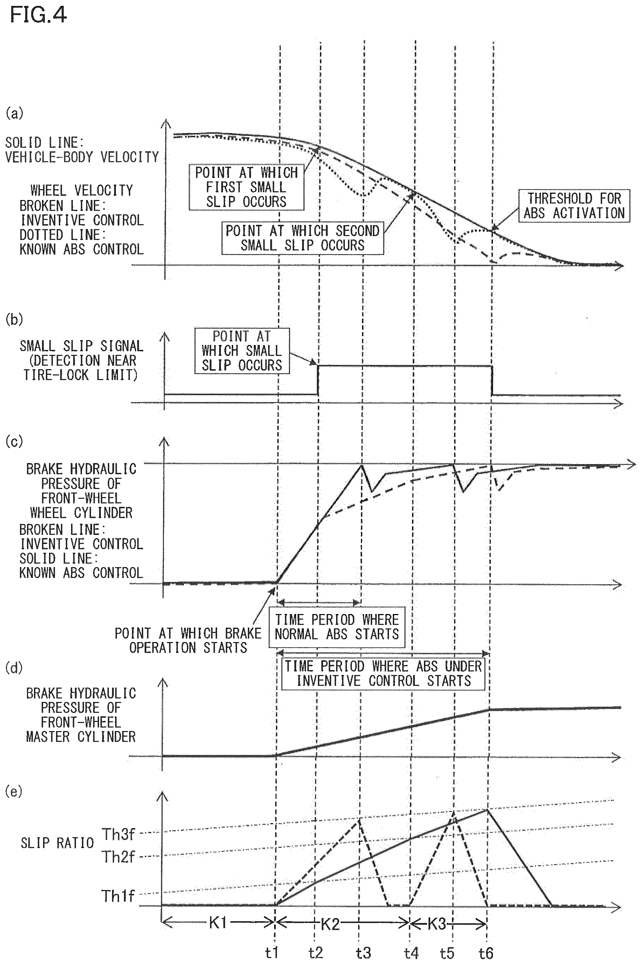

FIG. 4 shows graphs of an example of control by the brake hydraulic-pressure control device 70. Every horizontal axis in FIG. 4 represents time.

FIG. 4(a) shows how vehicle-body velocity and wheel velocity change. In FIG. 4(a), the vehicle-body velocity of a vehicle is indicated by a solid line, the wheel velocity of a vehicle including a known ABS control device is indicated by a dotted line, and the wheel velocity of a vehicle including the brake hydraulic-pressure control device 70 of the present invention is indicated by a broken line.

FIG. 4(b) shows the detection signal generated when a small slip of the front wheel 3 is detected.

FIG. 4(c) shows how the brake hydraulic pressure acting on the front-wheel wheel cylinder 33 changes. In FIG. 4(c), the brake hydraulic pressure in the vehicle including a known ABS control device is indicated by a solid line, and the brake hydraulic pressure in the vehicle including the brake hydraulic-pressure control device 70 of the present invention is indicated by a broken line.

FIG. 4(d) shows how the brake hydraulic pressure generated by the front-wheel master cylinder 52 changes.

FIG. 4(e) shows how the slip ratio detected by the front-wheel vehicle condition quantity detection unit 74 changes relative to the front-wheel thresholds Th1f to Th3f.

In this example, as in FIGS. 4(c) and 4(d), an operation of the front-wheel braking operation element 51 by the rider is initiated at time t1. Thereafter, the front-wheel braking operation element 51 is operated in the direction for increasing braking force, as in FIG. 4(d). No slip is present in the front wheel 3 before t1, at which the braking operation is initiated. In FIG. 4(a), for ease of view, the sections of the solid line, broken line and dotted line before t1 are displaced from one another.

Thereafter, at time t2, as in FIG. 4(b), a small slip is produced in the front wheel 3. The slip ratio at this moment will be referred to as first slip ratio. The first slip ratio will be treated as the predetermined first front-wheel threshold Th1f. At time t2, the drive signal generation unit 73 changes the correlation between the operation condition of the front-wheel braking operation element 51 and the drive signal for the electric actuator 71. This reduces the amount of increase in the brake hydraulic pressure acting on the front-wheel wheel cylinder 33 in relation to a unit operation amount of the front-wheel braking operation element 51. That is, the amount of increase in the brake hydraulic pressure acting on the front-wheel wheel cylinder 33 in relation to the operation amount per unit time of the front-wheel braking operation element 51 is reduced. This reduced amount of increase will be treated as the first increase amount (see FIG. 4(c)).

Thereafter, at time t4, the slip ratio reaches a second slip ratio. This second slip ratio will be treated as the predetermined second front-wheel threshold Th2f. At time t4, the front-wheel drive signal generation unit 73 changes the relationship between the operation condition of the front-wheel braking operation element 51 and the drive signal for the electric actuator 71. This reduces the amount of increase in the brake hydraulic pressure acting on the front-wheel wheel cylinder 33 in relation to a unit operation amount of the front-wheel braking operation element 51. That is, the amount of increase in the brake hydraulic pressure acting on the front-wheel wheel cylinder 33 in relation to the operation amount per unit time of the front-wheel braking operation element 51 is reduced. This reduced amount of increase will be treated as the second increase amount (see FIG. 4(c)). The second increase amount is smaller than the first increase amount.

Thereafter, at time t6, ABS activation is initiated in the vehicle including the brake hydraulic-pressure control device 70. At time t6, the slip ratio reaches a third front-wheel threshold Th3f. At this moment, the front-wheel brake hydraulic-pressure control device drives the front-wheel electric actuator so as to reduce the brake hydraulic pressure acting on the front-wheel wheel cylinder. This activates the ABS at time t6. It should be understood that FIG. 4(e) shows the relationship in magnitude among the front-wheel thresholds Th1f to Th3f and relative changes in the slip ratio of the front wheel 3 relative to the front-wheel thresholds Th1f to Th3f and the slip ratio of zero. FIG. 4(e) does not show the absolute slip ratio values of the front-wheel thresholds Th1f to Th3f and the absolute slip ratio of the front wheel 3.

In the example shown in FIG. 4, between time t1 and time t4, the amount of increase in the brake hydraulic pressure acting on the front-wheel wheel cylinder 33 in relation to the operation amount per unit time of the front-wheel braking operation element 51 represents the first increase amount. The period between time t1 and time t4 is the period between the point at which the slip ratio (i.e. vehicle condition quantity) of the front wheel exceeds the first front-wheel threshold Th1f and the point at which it reaches the second front-wheel threshold Th2f. Between time t4 and time t6, the amount of increase in the brake hydraulic pressure acting on the front-wheel wheel cylinder 33 in relation to the operation amount per unit time of the front-wheel braking operation element 51 represents the second increase amount. The period between time t4 and time t6 is the period between the point at which the slip ratio (i.e. vehicle condition quantity) of the front wheel exceeds the second front-wheel threshold Th2f and the point at which it reaches the third front-wheel threshold Th3f, i.e. the upper limit of the slip ratio (i.e. vehicle condition quantity) of the front wheel.

In the example shown in FIG. 4, in a region directly before the initiation of ABS activation, the amount of increase in the brake hydraulic pressure acting on the front-wheel wheel cylinder 33 in relation to the operation amount per unit time of the front-wheel braking operation element 51 decreases. This changes the rigidity feel experienced by the rider when operating the front-wheel braking operation element 51 in a region directly before the initiation of ABS activation. This makes it easier for the rider to hold the front-wheel braking operation element 51 in a region directly before the initiation of ABS activation. Control by the rear-wheel brake hydraulic-pressure control device 80 may be the same control shown in FIG. 4. This makes it easier for the rider to hold the rear-wheel braking operation element 61 in a region directly before the initiation of ABS activation.

In the example shown in FIG. 4, each of the front-wheel thresholds Th1f to Th3h varies depending on vehicle-body velocity. In this example, as vehicle velocity decreases, the front-wheel thresholds Th1f to Th3h decrease. Alternatively, at least one of the front-wheel thresholds Th1f to Th3h may be a constant value that does not vary depending on vehicle-body velocity.

On the other hand, in the vehicle with known ABS control, ABS activation is initiated at time t3, as in FIG. 4(c).

The rear-wheel brake hydraulic-pressure control device 80 includes an electric actuator 81 capable of controlling the brake hydraulic pressure acting on the rear-wheel wheel cylinder 43, a rear-wheel braking operation condition detection unit 82 for detecting the operation condition of the rear-wheel braking operation element 61, a drive signal generation unit 83 for generating a drive signal for driving the electric actuator 81, and a vehicle condition quantity detection unit 84 for detecting a vehicle condition quantity relating to the condition of the vehicle. Thus, the brake hydraulic-pressure control device 80 for the rear wheel has the same configuration as the brake hydraulic-pressure control device 70 for the front wheel.

The rear-wheel brake hydraulic-pressure control device 80 includes a rear-wheel electric actuator 81, a rear-wheel braking operation condition detection unit 82, a rear-wheel drive signal generation unit 83, and a rear-wheel vehicle condition quantity detection unit 84. The rear-wheel electric actuator 81 controls the brake hydraulic pressure acting on the rear-wheel wheel cylinder 43. The rear-wheel braking operation condition detection unit 82 detects the operation condition of the rear-wheel braking operation element 61. The rear-wheel drive signal generation unit 83 generates a drive signal for driving the rear-wheel electric actuator 81. The rear-wheel vehicle condition quantity detection unit 84 detects a vehicle condition quantity relating to the condition of the vehicle. The rear-wheel brake hydraulic-pressure control device 80 may further include a rear-wheel electric valve 85. The rear-wheel electric valve 85 is provided on the rear-wheel brake fluid channel 63 and switches the rear-wheel brake fluid channel 63 to communicated and disconnected states. The electric valve 85 is provided between the rear-wheel master cylinder 62 and the position at which the electric actuator 81 is connected to the brake fluid channel 63.

The rear-wheel electric actuator 81 is driven electrically, and is provided on the rear-wheel brake fluid channel 63. The rear-wheel electric actuator 81 may be any device that is capable of electrically controlling the brake hydraulic pressure, and examples include electrically driven gear pumps, electrically driven trochoid pumps, electrically driven piston pumps (including swash plate pumps), and electrically driven master cylinders. Preferably, a pump with small hydraulic-pressure variations may be used.

The rear-wheel braking operation condition detection unit 82 detects the operation condition of the rear-wheel braking operation element 61. The rear-wheel braking operation condition detection unit 82 may be, for example, a master-cylinder brake hydraulic pressure detection unit for detecting a brake hydraulic pressure generated by the rear-wheel master cylinder 62 actuated by an operation of the rear-wheel braking operation element 61. The master-cylinder brake hydraulic pressure detection unit may be a pressure sensor that detects a brake hydraulic pressure generated by the rear-wheel master cylinder 62. The rear-wheel braking operation condition detection unit 82 outputs a signal corresponding to the detected operation condition of the rear-wheel braking operation element 61.

The rear-wheel drive signal generation unit 83 defines the correlation between the operation condition of the rear-wheel braking operation element 61 and the drive signal for the electric actuator 81. The rear-wheel drive signal generation unit 83 uses the defined correlation to generate a drive signal for driving the electric actuator 81 based on the operation condition of the rear-wheel braking operation element 61 detected by the braking operation condition detection unit 82.

The rear-wheel drive signal generation unit 83 includes a storage unit 83a. The storage unit 83a stores rear-wheel drive signal generation information. The rear-wheel drive signal generation information defines the relationship between the operation condition of the rear-wheel braking operation element 61 and the drive signal for the rear-wheel electric actuator 81. The rear-wheel drive signal generation information relates to, for example, the magnitude of the drive signal for the electric actuator 81 in relation to the operation amount of the rear-wheel braking operation element 61.

Further, the rear-wheel drive signal generation unit 83 includes a rear-wheel generation information changing unit 83b. The rear-wheel generation information changing unit 83b changes the rear-wheel drive signal generation information stored in the storage unit 83a. The rear-wheel generation information changing unit may be referred to as correlation changing unit.

The rear-wheel vehicle condition quantity detection unit 84 is capable of detecting a vehicle condition quantity relating to the condition of the motorcycle 1. The rear-wheel vehicle condition quantity detection unit 84 may be constituted by, for example, at least one of the IMU 22, vehicle-body velocity detection unit 25, pitch angle detection unit 26 and roll angle detection unit 27. At least part of the rear-wheel vehicle condition quantity detection unit 84 may be shared with the front-wheel vehicle condition quantity detection unit 74. For example, the sensors for the movement of the entire vehicle and the vehicle body may be shared by the front-wheel and rear-wheel vehicle condition quantity detection units 74 and 84. Sensors for the movement of the wheels may be separately provided for each of the front-wheel and rear-wheel vehicle condition quantity detection units 74 and 84.

The rear-wheel drive signal generation unit 83 changes the correlation between the operation condition of the rear-wheel braking operation element 61 and the drive signal for the electric actuator 81 when the rear-wheel braking operation element 61 has been operated in the direction for increasing braking force and the vehicle condition quantity detected by the vehicle condition quantity detection unit 84 has exceeded a first rear-wheel threshold. This change to the correlation is done based on the operation condition of the rear-wheel braking operation element 61 detected by the braking operation condition detection unit 82 and the vehicle condition quantity detected by the vehicle condition quantity detection unit 84. The rear-wheel drive signal generation unit 83 changes the correlation so as to reduce the amount of increase in the brake hydraulic pressure acting on the rear-wheel wheel cylinder 43 in relation to the amount of change per unit time in the operation amount of the rear-wheel braking operation element 61.

More specifically, when the rear-wheel drive signal generation unit 83 receives, from the braking operation condition detection unit 82, information indicating that the rear-wheel braking operation element 61 has been operated in the direction for increasing braking force and receives, from the vehicle condition quantity detection unit 84, information indicating that the vehicle condition quantity has exceeded a predetermined first rear-wheel threshold, the rear-wheel generation information changing unit 83b changes the correlation. Here, the rear-wheel generation information changing unit 83b may change the rear-wheel drive signal generation information so as to reduce the amount of increase in the brake hydraulic pressure acting on the rear-wheel wheel cylinder 43 in relation to a unit operation amount of the rear-wheel braking operation element 61.

Thus, when the rear-wheel braking operation element 61 has been operated in the direction for increasing braking force, the amount of increase in the brake hydraulic pressure acting on the rear-wheel wheel cylinder 43 in relation to a unit operation amount of the rear-wheel braking operation element 61 decreases. This makes it easier for the rider to hold the rear-wheel braking operation element 61.

The first rear-wheel threshold of the present embodiment may be a value smaller than a threshold for activating control using signals from a conventional ABS or IMU. For example, the threshold for activating the ABS is typically a slip ratio of about 10 to 20 %. For example, if the vehicle-body velocity is 100 km/h, the ABS is activated when the wheel velocity is 90 to 80 km/h. The first rear-wheel threshold for slip ratio of the present embodiment may be, for example, sufficiently smaller than 10 %; for example, it may be about 1 to 5 %.

When the rear-wheel braking operation element 61 has been operated in the direction for increasing braking force and the vehicle condition quantity detected by the vehicle condition quantity detection unit 84 has exceeded the first rear-wheel threshold, the rear-wheel drive signal generation unit 83 may set, to a first increase amount, the amount of increase in the brake hydraulic pressure acting on the rear-wheel wheel cylinder 43 in relation to a unit operation amount of the rear-wheel braking operation element 61. In such implementations, when the rear-wheel braking operation element 61 has been operated in the direction for increasing braking force and the vehicle condition quantity detected by the vehicle condition quantity detection unit 84 has exceeded a second rear-wheel threshold that is larger than the first rear-wheel threshold, the rear-wheel drive signal generation unit 83 may set, to a second increase amount smaller than the first increase amount, the amount of increase in the brake hydraulic pressure acting on the rear-wheel wheel cylinder 43 in relation to a unit operation amount of the rear-wheel braking operation element 61.

(Embodiment 2)

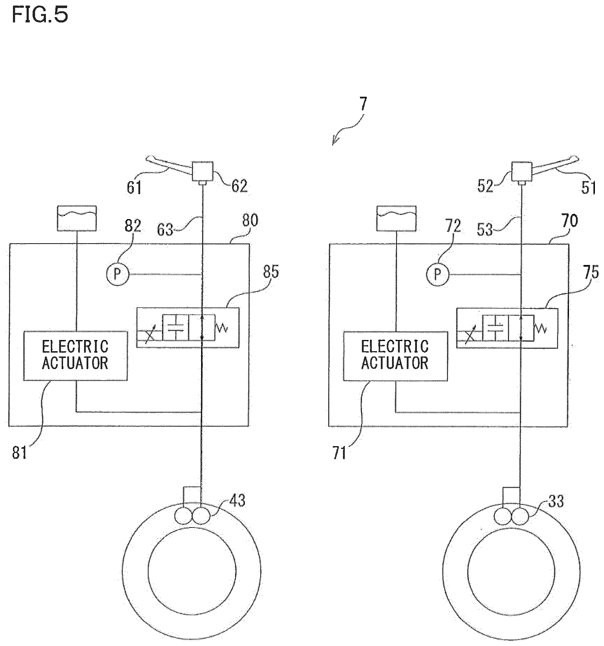

FIG. 5 schematically shows the construction of a brake system according to Embodiment 2. In this brake system, while the vehicle is being braked, the front-wheel brake fluid channel 53 between the front-wheel master cylinder 52 and the front-wheel wheel cylinder 33 is in the disconnected state. With the front-wheel brake fluid channel 53 in the disconnected state, the brake hydraulic pressure acting on the front-wheel wheel cylinder 33 is decided on by the front-wheel electric actuator 71 depending on the brake hydraulic pressure generated by the front-wheel master cylinder 52. The brake system shown in FIG. 5 is of the bi-wire type. The same applies to the brake hydraulic-pressure control device 80 for the rear wheel. While the vehicle is being braked, the rear-wheel brake fluid channel 63 between the rear-wheel master cylinder 62 and the rear-wheel wheel cylinder 43 is in the disconnected state. With the rear-wheel brake fluid channel 63 in the disconnected state, the brake hydraulic pressure acting on the rear-wheel wheel cylinder 43 is decided on by the rear-wheel electric actuator 81 depending on the brake hydraulic pressure generated by the rear-wheel master cylinder 62.

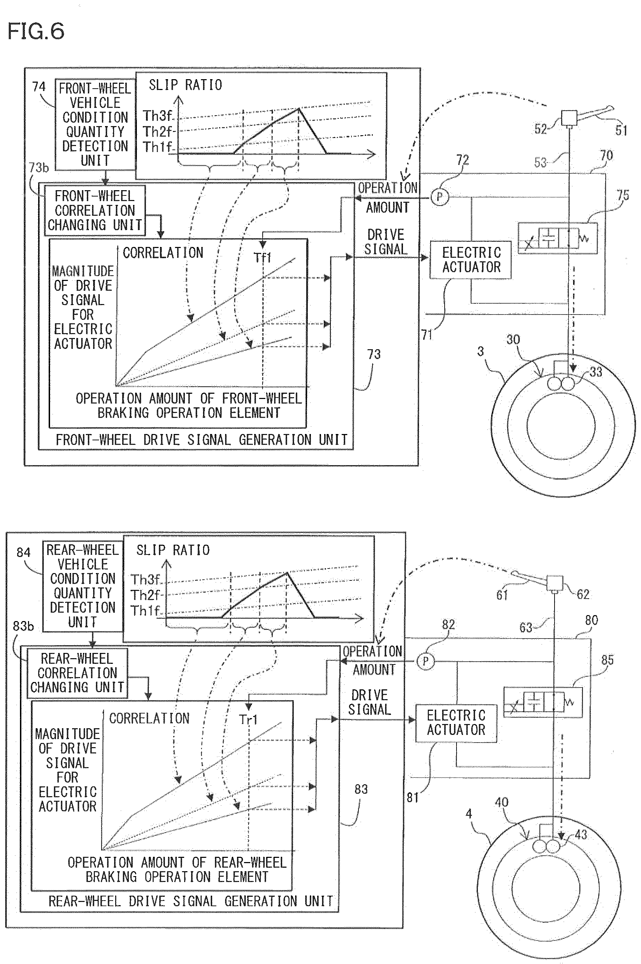

FIG. 6 illustrates a straddled vehicle according to the above-illustrated embodiment. As discussed above, the straddled vehicle includes a vehicle-body frame, and a front wheel 3 and a rear wheel 4 supported on the vehicle-body frame. The straddled vehicle includes a front-wheel brake 30 including a front-wheel wheel cylinder 33 for generating a braking force for the front wheel 3, a rear-wheel braking operation element 51, a front-wheel master cylinder 52, and a front-wheel brake fluid channel 53. Further, the straddled vehicle includes a rear-wheel brake 40 including a rear-wheel wheel cylinder 43 for generating a braking force for the rear wheel 4, a rear-wheel braking operation element 61, a rear-wheel master cylinder 62 and a rear-wheel brake fluid channel 63. The front-wheel brake fluid channel 53 is independent from the rear-wheel brake fluid channel 63. The straddled vehicle includes a front-wheel brake hydraulic-pressure control device 70 and rear-wheel brake hydraulic-pressure control device 80.

The front-wheel brake hydraulic-pressure control device 70 further includes a front-wheel electric actuator 71, a front-wheel braking operation condition detection unit 72, a front-wheel drive signal generation unit 73, and a front-wheel vehicle condition quantity detection unit 74. The front-wheel drive signal generation unit 73 defines the correlation between the operation condition of the front-wheel braking operation element 51 and the drive signal for the front-wheel electric actuator 71. The front-wheel drive signal generation unit 73 uses the correlation to generate a drive signal for driving the front-wheel electric actuator 71 based on the operation condition of the front-wheel braking operation element 51. The front-wheel vehicle condition quantity detection unit 74 detects a vehicle condition quantity relating to the condition of the vehicle. The vehicle condition quantity may be the slip ratio or slip amount of the front wheel 3, for example.

The front-wheel drive signal generation unit 73 includes a front-wheel correlation changing unit 73b. The front-wheel correlation changing unit 73b changes the correlation between the operation condition of the front-wheel braking operation element and the drive signal for the front-wheel electric actuator when the front-wheel braking operation element 51 has been operated in the direction for increasing braking force and the vehicle condition quantity detected by the front-wheel vehicle condition quantity detection unit has exceeded a first front-wheel threshold Th1f. This reduces the amount of increase in the brake hydraulic pressure acting on the front-wheel wheel cylinder 33 in relation to the amount of change per unit time of the operation amount of the front-wheel braking operation element 51. In the example shown in FIG. 6, the amount of increase in the brake hydraulic pressure of the front-wheel wheel cylinder 33 in relation to a unit operation amount of the front-wheel braking operation element 51 is reduced.

As the amount of increase in the brake hydraulic pressure of the front-wheel wheel cylinder 33 in relation to the operation amount of the front-wheel braking operation element 51 is reduced, the rider feels as if the front-wheel braking operation element 51 were harder in terms of its operation, i.e. the operation rigidity were higher. Thus, as the vehicle condition changes, the rigidity feel experienced by the rider in operating the front-wheel braking operation element 51 changes. For example, the rider can more easily hold the front-wheel braking operation element 51.

The rear-wheel brake hydraulic-pressure control device 80 further includes a rear-wheel electric actuator 81, a rear-wheel braking operation condition detection unit 82, a rear-wheel drive signal generation unit 83, and a rear-wheel vehicle condition quantity detection unit 84. The rear-wheel drive signal generation unit 83 defines the correlation between the operation condition of the rear-wheel braking operation element 61 and the drive signal for the rear-wheel electric actuator 81. The rear-wheel drive signal generation unit 83 uses the correlation to generate a drive signal for driving the rear-wheel electric actuator 81 based on the operation condition of the rear-wheel braking operation element 61. The rear-wheel vehicle condition quantity detection unit 84 detects a vehicle condition quantity relating to the condition of the vehicle. The vehicle condition quantity may be the slip ratio or slip amount of the rear wheel 4, for example.

The rear-wheel drive signal generation unit 83 includes a rear-wheel correlation changing unit 83b. The rear-wheel correlation changing unit 83b changes the correlation between the operation condition of the rear-wheel braking operation element 61 and the drive signal for the rear-wheel electric actuator 81 when the rear-wheel braking operation element 61 has been operated in the direction for increasing braking force and the vehicle condition quantity detected by the rear-wheel vehicle condition quantity detection unit 84 has exceeded a first rear-wheel threshold Th1r. This reduces the amount of increase in the brake hydraulic pressure acting on the rear-wheel wheel cylinder 43 in relation to the amount of change per unit time of the operation amount of the rear-wheel braking operation element 61. In the example shown in FIG. 6, the amount of increase in the brake hydraulic pressure of the rear-wheel wheel cylinder 43 in relation to a unit operation amount of the rear-wheel braking operation element 61 is reduced.

As the amount of increase in the brake hydraulic pressure of the rear-wheel wheel cylinder 43 in relation to the operation amount of the rear-wheel braking operation element 61 is reduced, the rider feels as if the rear-wheel braking operation element 61 were harder in terms of its operation, i.e. the operation rigidity were higher. Thus, as the vehicle condition changes, the rigidity feel experienced by the rider in operating the rear-wheel braking operation element 61 changes. For example, the rider can more easily hold the rear-wheel braking operation element 61.

[Other Embodiments]

(1) As discussed above, a brake hydraulic-pressure control device may be provided on each of the front and rear wheels 3 and 4. Alternatively, a brake hydraulic-pressure control device may be provided only on the front or rear wheel 3 or 4.

(2) The brake hydraulic-pressure control device may be combined with an ABS device or an interlock braking apparatus. Further, a portion of a brake hydraulic-pressure control device may serve as part of an ABS device or interlock braking apparatus.

The implementation where the front-wheel drive signal generation unit defines the correlation between the operation condition of the front-wheel braking operation element and the drive signal for the front-wheel electric actuator may be an implementation where front-wheel drive signal generation information indicative of the correlation between the operation condition of the front-wheel braking operation element and the drive signal for the front-wheel electric actuator is stored, as discussed above. The front-wheel drive signal generation information may be correlation data for determining the drive signal corresponding to the operation condition of the front-wheel braking operation element. The front-wheel drive signal generation information may be information indicative of the ratio of the brake hydraulic pressure of the front-wheel wheel cylinder relative to the brake hydraulic pressure of the front-wheel master cylinder, for example. The front-wheel drive signal generation information may be described as information indicative of the braking force applied by the front-wheel electric actuator in relation to the operation amount of the front-wheel braking operation element. The implementation where the front-wheel drive signal generation information is stored may be an implementation where the information is stored in the format of map data or table data, or may be a program or electronic circuit for calculating the drive signal corresponding to the input operation condition of the front-wheel braking operation element.

Based on the defined correlation, the front-wheel drive signal generation unit generates a drive signal corresponding to the operation condition of the front-wheel braking operation element detected by the front-wheel braking operation condition detection unit. The drive signal may be a signal indicative of the brake hydraulic pressure to be applied to the front-wheel wheel cylinder by the front-wheel electric actuator. For example, if the front-wheel electric actuator is a motor, the drive signal may be a command value for the motor.

The front-wheel correlation changing unit changes the correlation between the operation condition quantity of the front-wheel braking operation element and the drive signal for the front-wheel electric actuator when the vehicle condition has exceeded a first front-wheel threshold. The implementation where the front-wheel correlation changing unit changes the correlation may be, for example, an implementation where front-wheel drive signal generation information that has been stored is updated based on the detected vehicle condition quantity. Further, the front-wheel correlation changing unit may change the correlation between the operation condition amount of the front-wheel braking operation element and the drive signal for the front-wheel electric actuator when the vehicle condition has exceeded a second front-wheel threshold larger than the first front-wheel threshold.

The front-wheel correlation changing unit may change the correlation so as to reduce the ratio of the magnitude of the brake hydraulic pressure of the front-wheel master cylinder controlled by the drive signal relative to the operation amount of the front-wheel braking operation, for example. For example, the correlation may be changed so as to reduce the ratio of the brake hydraulic pressure of the front-wheel wheel cylinder relative to the brake hydraulic pressure of the front-wheel master cylinder. This reduces the amount of increase in the brake hydraulic pressure acting on the front-wheel wheel cylinder in relation to the amount of change per unit time of the operation amount of the front-wheel braking operation element.

The implementation where the rear-wheel drive signal generation unit defines the correlation between the operation condition of the rear-wheel braking operation element and the drive signal for the rear-wheel electric actuator may be an implementation where rear-wheel drive signal generation information indicative of the correlation between the operation condition of the braking operation element and the drive signal for the rear-wheel electric actuator is stored, as discussed above. The rear-wheel drive signal generation information may be correlation data for determining the drive signal corresponding to the operation condition of the rear-wheel braking operation element. The rear-wheel drive signal generation information may be information indicative of the ratio of the brake hydraulic pressure of the rear-wheel wheel cylinder relative to the brake hydraulic pressure of the rear-wheel master cylinder, for example. The rear-wheel drive signal generation information may be described as information indicative of the braking force applied by the rear-wheel electric actuator in relation to the operation amount of the rear-wheel braking operation element. The implementation where the rear-wheel drive signal generation information is stored may be an implementation where the information is stored in the format of map data or table data, or may be a program or electronic circuit for calculating the drive signal corresponding to the input operation condition of the rear-wheel braking operation element.

Based on the defined correlation, the rear-wheel drive signal generation unit generates a drive signal corresponding to the operation condition of the rear-wheel braking operation element detected by the rear-wheel braking operation condition detection unit. The drive signal may be a signal indicative of the brake hydraulic pressure to be applied to the rear-wheel wheel cylinder by the rear-wheel electric actuator. For example, if the rear-wheel electric actuator is a motor, the drive signal may be a command value for the motor.

The rear-wheel correlation changing unit changes the correlation between the operation condition amount of the rear-wheel braking operation element and the drive signal for the rear-wheel electric actuator when the vehicle condition has exceeded a first rear-wheel threshold. The implementation where the rear-wheel correlation changing unit changes the correlation may be, for example, an implementation where rear-wheel drive signal generation information that has been stored is updated based on the external input information. Further, the rear-wheel correlation changing unit may change the correlation between the operation condition quantity of the rear-wheel braking operation element and the drive signal for the rear-wheel electric actuator when the vehicle condition quantity has exceeded a second rear-wheel threshold larger than the first rear-wheel threshold.

The rear-wheel correlation changing unit may change the correlation so as to reduce the ratio of the magnitude of the brake hydraulic pressure of the rear-wheel master cylinder controlled by the drive signal relative to the operation amount of the rear-wheel braking operation, for example. For example, the correlation may be changed so as to reduce the ratio of the brake hydraulic pressure of the rear-wheel wheel cylinder relative to the brake hydraulic pressure of the rear-wheel master cylinder. This reduces the amount of increase in the brake hydraulic pressure acting on the rear-wheel wheel cylinder in relation to the amount of change per unit time of the operation amount of the rear-wheel braking operation element.

Reducing the amount of increase in the brake hydraulic pressure acting on the front-wheel wheel cylinder in relation to the amount of change per unit time of the operation amount of the braking operation element when the vehicle condition quantity has exceeded a threshold means making the amount of increase found when the vehicle condition quantity has exceeded a threshold smaller than the amount of increase found when the vehicle condition quantity is not above the threshold.

The vehicle condition quantity detected by the vehicle condition quantity detection unit, which is at least one of the front-wheel and rear-wheel vehicle condition quantity detection units is a physical quantity relating to the condition of the straddled vehicle. The vehicle condition quantity may be, for example, a physical quantity relating to the motion of the straddled vehicle. The physical quantity relating to the motion of the straddled vehicle may be a physical quantity indicative of the motion of the vehicle-body frame, front wheel or rear wheel relative to the ground surface. The physical quantity indicative of a motion may be, for example, a displacement, velocity or acceleration in a straight-line motion or rotational motion of the vehicle-body frame, front wheel or rear wheel relative to the ground surface. The straight-line motion may be, for example, a straight-line motion in at least one of the front-rear direction, left-right direction and top-bottom direction of the straddled vehicle. The rotational motion may be a rotational motion about at least one of a front-rear axis (roll axis), left-right axis (pitch axis) and top-bottom axis (yaw axis) of the straddled vehicle. Two or more of the vehicle condition quantities described below may be detected by the vehicle condition quantity detection unit. The vehicle condition quantity detected by the vehicle condition quantity detection unit may be an actually measured values or estimated values.

An example of the vehicle condition quantity relating to the vehicle-body frame may be the velocity of the vehicle-body frame (i.e. vehicle-body velocity) or the acceleration of the vehicle-body frame as measured in the direction in which the vehicle advances, the displacement, velocity or acceleration in a motion of the vehicle-body frame relative to the ground surface as determined along the left-right direction. Or, an example of the vehicle condition quantity relating to the vehicle-body frame may be the roll angle, yaw angle or pitch angle of the vehicle-body frame, or the angular velocity or angular acceleration thereof.

As an example, the vehicle condition quantity detected by the front-wheel vehicle condition quantity detection unit may be a physical quantity relating to the motion of the front wheel. The vehicle condition quantity detected by the rear-wheel vehicle condition quantity detection unit may be a physical quantity relating to the motion of the rear wheel. The physical quantity relating to the motion of a wheel may be, for example, a physical quantity relating to a slip of the wheel, the rotational velocity of the wheel, or the coefficient of friction between the wheel and ground surface. The physical quantity relating to a slip of the wheel may be the slip ratio or slip amount of the wheel, a physical quantity based on which the slip ratio or slip quantity is determined, or a physical quantity calculated from the slip ratio or slip amount. The slip amount of the wheel may be calculated by, for example, determining the difference between the vehicle-body velocity and wheel velocity. The slip ratio of the wheel may be calculated by, for example, determining the ratio between the vehicle-body velocity and wheel velocity.

The physical quantity relating to a skid of the wheel may be a vehicle condition quantity detected. The physical quantity relating to a skid of the wheel may be, for example, the skid angle of the wheel, i.e. slip angle, the skid velocity of the wheel, or the skid acceleration of the wheel. The slip angle may be the angle formed by a coordinate of the wheel and the direction in which the vehicle advances. The skid of the wheel may be a displacement of the wheel relative to the ground surface as determined along the direction perpendicular to the direction in which the vehicle advances.

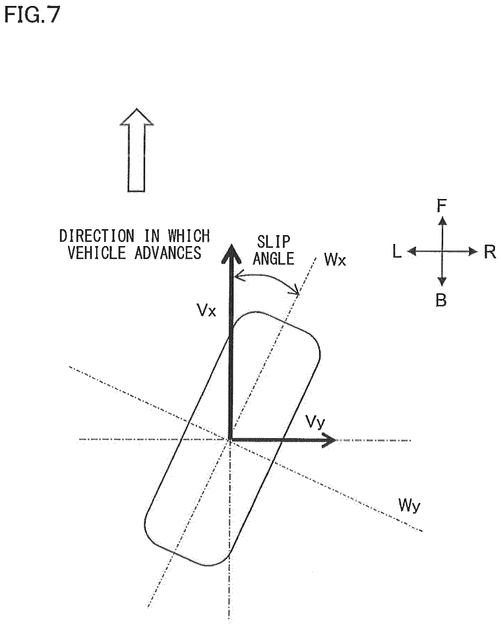

FIG. 7 is a view of a wheel from above. In FIG. 7, arrow F indicates the front direction with respect to the vehicle. Arrow B indicates the rear direction with respect to the vehicle. Arrow R indicates the right direction with respect to the vehicle. Arrow L indicates the left direction with respect to the vehicle. In the example shown in FIG. 7, the angle formed by the line Wx perpendicular to the axle Wy on the plane of the road surface and the direction in which the vehicle advances represents the slip angle. The direction in which the vehicle advances is the front-rear direction of the vehicle. It is assumed that the direction of the skid velocity Vy is a direction perpendicular to the velocity Vx of the vehicle (i.e. vehicle-body velocity Vx). When the vehicle has been turned, the direction of Vx is the direction of a tangent line on a circular track during a turn. The skid acceleration dVy/dt may be calculated by, for example, the following equation, (1):

$$dVy/dt = ay - \omega z \cdot Vx + \omega x \cdot vz - g \cdot \sin\varphi \cdot \cos\Theta \qquad (1),$$

where ay indicates the acceleration of the vehicle-body frame in the left-right direction (lateral acceleration);
$\omega z$ indicates the yaw rate of the vehicle;
$\omega x$ indicates the roll rate of the vehicle;
Vz indicates velocity in the vertical direction;
g indicates gravitational acceleration;
$\varphi$ indicates the inclination angle of the vehicle-body frame in the left-right direction; and
$\Theta$ indicates the pitch angle of the vehicle-body frame.

The lateral acceleration, roll rate, yaw rate and inclination angle listed above may be measured by an IMU sensor, for example. An approximation may be made to provide Vz=0 m/s. The skid velocity Vy and slip angle may be estimated by integrating the lateral acceleration dVy/dt.

A skid of a wheel is a phenomenon in which the wheel is displaced relative to the ground surface in the left-right direction of the vehicle. The physical quantity relating to a skid of the front or rear wheel may be a value obtained by detecting the displacement, velocity or acceleration of the skid of the wheel that has actually occurred or an estimate thereof. The method of calculating the physical quantity relating to a skid of the front or rear wheel is not limited to the one in the above-illustrated embodiment. For example, a movement of the front or rear wheel relative to the road surface may be measured by a ground speed meter to obtain the physical quantity relating to the skid. In such implementations, the straddled vehicle may include a ground speed meter that directly measures the physical quantity relating to a skid.

When the vehicle condition quantity detected by the front-wheel vehicle condition quantity detection unit has reached a third front-wheel threshold, the front-wheel brake hydraulic-pressure control device drives the front-wheel electric actuator to reduce the brake hydraulic pressure of the front-wheel wheel cylinder. Here, the brake hydraulic pressure of the front-wheel wheel cylinder may be made lower than the brake hydraulic pressure of the front-wheel master cylinder. The third front-wheel threshold may be a value larger than the first and second front-wheel thresholds. Making it lower than the brake hydraulic pressure of the front-wheel master cylinder makes the vehicle condition quantity smaller than the third front-wheel threshold. When the vehicle condition quantity reaches a predetermined lower limit, the brake hydraulic-pressure control device may drive the front-wheel electric actuator to increase the brake hydraulic pressure of the front-wheel wheel cylinder. This allows the vehicle condition quantity to be adjusted to fluctuate between the third front-wheel threshold and the lower limit. When the vehicle condition quantity reaches the third front-wheel threshold, the adjustment period during which the front-wheel electric actuator is driven to reduce brake hydraulic pressure is initiated. During a period directly before the initiation of the adjustment period, the vehicle condition quantity goes past the first and second front-wheel thresholds and reaches the third front-wheel threshold. The correlation is changed in such a manner that the braking force in relation to the operation amount of the front-wheel braking operation element is reduced at least when the vehicle condition quantity has exceeded the first front-wheel threshold. This increases the rigidity feel experienced when the front-wheel braking operation element is operated in the period between the point for the first front-wheel threshold, directly before the initiation of the adjustment period, and the point at which the third front-wheel threshold is reached. This makes it easier for the rider to hold the front-wheel braking operation element in a region directly before the adjustment period.

At least one of the first, second and third front-wheel thresholds may vary depending on the vehicle condition. Or, at least one of the first, second and third front-wheel thresholds may be a fixed value that does not vary depending on the vehicle condition.

When the vehicle condition quantity detected by the rear-wheel vehicle condition quantity detection unit has reached a third rear-wheel threshold, the rear-wheel brake hydraulic-pressure control device drives the rear-wheel electric actuator to reduce the brake hydraulic pressure of the rear-wheel wheel cylinder. Here, the brake hydraulic pressure of the rear-wheel wheel cylinder may be made lower than the brake hydraulic pressure of the rear-wheel master cylinder. The third rear-wheel threshold may be a value larger than the first and second rear-wheel thresholds. Making it lower than the brake hydraulic pressure of the rear-wheel master cylinder makes the vehicle condition quantity smaller than the third rear-wheel threshold. When the vehicle condition quantity reaches a predetermined lower limit, the brake hydraulic-pressure control device may drive the rear-wheel electric actuator to increase the brake hydraulic pressure of the rear-wheel wheel cylinder. This allows the vehicle condition quantity to be adjusted to fluctuate between the third rear-wheel threshold and the lower limit. When the vehicle condition quantity reaches the third rear-wheel threshold, the adjustment period during which the rear-wheel electric actuator is driven to reduce brake hydraulic pressure is initiated. During a period directly before the initiation of the adjustment period, the vehicle condition quantity goes past the first and second rear-wheel thresholds and reaches the third rear-wheel threshold. The correlation is changed in such a manner that the braking force in relation to the operation amount of the rear-wheel braking operation element is reduced at least when the vehicle condition quantity has exceeded the first rear-wheel threshold. This increases the rigidity feel experienced when the rear-wheel braking operation element is operated in the period between the point for the first rear-wheel threshold, directly before the initiation of the adjustment period, and the point at which the third rear-wheel threshold is reached. This makes it easier for the rider to hold the rear-wheel braking operation element in a region directly before the adjustment period.

At least one of the first, second and third rear-wheel thresholds may vary depending on the vehicle condition. Or, at least one of the first, second and third rear-wheel thresholds may be a fixed value that does not vary depending on the vehicle condition.

At least one of the front-wheel brake hydraulic-pressure control device and rear wheel brake hydraulic-pressure control device may be, for example, a booster i.e. servo device that supplies the wheel cylinder with a brake hydraulic pressure larger than the brake hydraulic pressure input to the master cylinder. Alternatively, the brake hydraulic-pressure control device may be a device that supplies the wheel cylinder with a brake hydraulic pressure that does not exceed the brake hydraulic pressure input to the master cylinder.

At least one of the front-wheel braking operation element and rear-wheel braking operation element may be supported on the bar handle. The rider may operate at least one of the front-wheel and rear-wheel braking operation elements with his hand. The rider can easily perceive the rigidity feel of the braking operation element operated with his hand. For example, at least one of the front-wheel and rear-wheel braking operation elements may be a lever extending along a grip of the bar handle. One of the front-wheel and rear-wheel braking operation elements may be a brake lever supported on the bar handle and the other may be a brake pedal positioned to be operable by the rider with his foot.

The bar handle includes a bar extending in the left-right direction of the straddled vehicle and rotatably supported on the vehicle-body frame. The bar of the bar handle may be composed of a single bar, or may be composed of two bars, to the left and right, connected to each other. For example, the left and right bars of the bar handle may be separate parts. That is, the bar handle may be a separate handle. A left grip is provided on the left end of the bar of the bar handle. A right grip is provided on the right end of the bar. The bar handle may swing in a range of 180 degrees (i.e. half rotation) or smaller. This swing range is represented by the difference between the steering angle found when the bar handle is operated to the leftmost and the steering angle found when the bar handle is operated to the rightmost (i.e. lock-to-lock).

Each of the front-wheel master cylinder, front-wheel wheel cylinder, rear-wheel master cylinder and rear-wheel wheel cylinder may be constructed to include a cylinder bore and a piston inserted into the cylinder bore. The cylinder bore and piston define, therebetween, a hydraulic pressure chamber filled with a brake fluid. The piston is positioned to be movable relative to the cylinder bore in the axial direction. The piston moves in the axial direction relative to the cylinder bore such that the brake hydraulic pressure in the cylinder changes. This actuates the cylinder. The hydraulic pressure chamber in the front-wheel master cylinder communicates with the hydraulic pressure chamber in the front-wheel wheel cylinder via the front-wheel brake fluid channel. The hydraulic pressure chamber in the rear-wheel master cylinder communicates with the hydraulic pressure chamber in the rear-wheel wheel cylinder via the rear-wheel brake fluid channel. The piston in the front-wheel master cylinder is coupled to the front-wheel braking operation element so as to move in response to an operation of the front-wheel braking operation element. The piston in the rear-wheel master cylinder is coupled to the rear-wheel braking operation element so as to move in response to an operation of the rear-wheel braking operation element. The piston in the front-wheel wheel cylinder is coupled to the caliper of the front-wheel brake. The caliper of the front-wheel brake is actuated by a movement of the piston in the front-wheel wheel cylinder. The piston in the rear-wheel wheel cylinder is coupled to the caliper in the rear-wheel brake. The caliper of the rear-wheel brake is actuated by a movement of the piston in the rear-wheel wheel cylinder.

An operation of the front-wheel braking operation element by the rider applies a brake hydraulic pressure to the front-wheel master cylinder. The front-wheel brake hydraulic-pressure control device applies, to the front-wheel wheel cylinder, a brake hydraulic pressure that is based on the brake hydraulic pressure in the front-wheel master cylinder. A front-wheel electric valve may be provided on the front-wheel brake fluid channel. The front-wheel brake hydraulic-pressure control device may be configured to apply a brake hydraulic pressure to the front-wheel wheel cylinder while the front-wheel brake fluid channel is held by the front-wheel electric valve in the disconnected state. The front-wheel brake hydraulic-pressure control device may be configured to apply a brake hydraulic pressure to the front-wheel wheel cylinder while the front-wheel brake fluid channel is in the communicated state between the front-wheel wheel cylinder and front-wheel wheel cylinder.

An operation of the rear-wheel braking operation element by the rider applies a brake hydraulic pressure to the rear-wheel master cylinder. The rear-wheel brake hydraulic-pressure control device applies, to the rear-wheel wheel cylinder, a brake hydraulic pressure that is based on the brake hydraulic pressure in the rear-wheel master cylinder. A rear-wheel electric valve may be provided on the rear-wheel brake fluid channel. The rear-wheel brake hydraulic-pressure control device may be configured to apply a brake hydraulic pressure to the rear-wheel wheel cylinder while the rear-wheel brake fluid channel is held by the rear-wheel electric valve in the disconnected state. The rear-wheel brake hydraulic-pressure control device may be configured to apply a brake hydraulic pressure to the rear-wheel wheel cylinder while the rear-wheel brake fluid channel is in the communicated state between the rear-wheel wheel cylinder and rear-wheel wheel cylinder.

If the increase in the brake hydraulic pressure in the wheel cylinder produced by the electric actuator is increased, the rider may feel as if the rigidity of the braking operation element were lower, i.e. the braking operation element were softer. If the increase in the brake hydraulic pressure in the wheel cylinder produced by the electric actuator is reduced, the rider may feel as if the rigidity of the braking operation element were higher, i.e. the braking operation element were harder.

The ECU in the above embodiments is an example of the control device for controlling the straddled vehicle. The control device may be a device for electrically controlling the straddled vehicle. The control device is supplied with electric power from the battery mounted on the straddled vehicle and operates. The control device may control at least some of the functions of the straddled vehicle that are electrically controlled. For example, the control device may include at least one of the front-wheel and rear-wheel drive signal generation units. The front-wheel and rear-wheel drive signal generation units may be constituted by a computer including memory and a processor, or may be constituted by an electronic circuit. The front-wheel and rear-wheel drive signal generation units may be constituted by a single computer or electronic circuit, or each of them may be constituted by an independent computer or electronic circuit. That is, the front-wheel and rear-wheel drive signal generation units may be constituted by a circuit or electronic part provided on a single substrate, or each of them may be constituted by a circuit or electronic circuit provided on a separate substrate.

The electric actuator may be configured to have no accumulator. In this case, the electric actuator may change the output of the drive source such as motor to achieve a variable brake hydraulic pressure to be supplied to the wheel cylinder, thereby adjusting this pressure. The electric actuator is not limited to arrangements with no accumulator. For example, the electric actuator may include a hydraulic pump and an accumulator. In this case, the accumulator accumulates the hydraulic pressure output from the hydraulic pump and supplies a certain hydraulic pressure. The electric actuator uses a hydraulic pressure supplied by the accumulator to control the brake hydraulic pressure in the wheel cylinder. When the hydraulic pressure in the accumulator drops below a lower limit, the hydraulic pump may be actuated; when the hydraulic pressure in the accumulator has reached a target level, the hydraulic pump may be stopped.

At least one of the front-wheel and rear-wheel electric valves may switch the brake fluid channel between a communicated state and a disconnected state, or may be configured to squeeze the bore of the brake fluid channel like a faucet. The electric valve leaves the brake fluid channel in the communicated state when the main switch is off. In at least a portion of the period where the main switch is on, the electric valve may hold the brake fluid channel in the disconnected state, or the bore of the brake fluid channel may be squeezed. Alternatively, the electric valve may leave the brake fluid channel in the communicated state even when the main switch is on.

The vehicle-body frame is a member for receiving stresses acting on the leaning vehicle during travel. For example, examples of the vehicle-body frame include a monocoque (stress skin construction), semi-monocoque, or a construction where vehicle parts also serve to receive stresses. For example, parts such as the engine or air cleaner may form part of the vehicle-body frame.

The front-wheel braking operation condition detection unit detects a physical quantity indicative of the operation condition of the front-wheel braking operation element. The physical quantity indicative of the operation condition of the front-wheel braking operation element may be, for example, the brake hydraulic pressure in the front-wheel master cylinder or how it changes over time, the displacement of the front-wheel braking operation element or how it changes over time, or the force acting on the front-wheel braking operation element or front-wheel master cylinder or how they change over time. The rear-wheel braking operation condition detection unit detects a physical quantity indicative of the operation condition of the rear-wheel braking operation element. The physical quantity indicative of the operation condition of the rear-wheel braking operation element may be, for example, the brake hydraulic pressure in the rear-wheel master cylinder or how it changes over time, the displacement of the rear-wheel braking operation element or how it changes over time, or the force acting on the rear-wheel braking operation element or rear-wheel master cylinder or how they change over time.

EXPLANATION OF CHARACTERS

| | |
|---|---|
| 1 | straddled vehicle |
| 2 | vehicle-body frame |
| 3 | front wheel |
| 4 | rear wheel |
| 20 | handles |
| 30 | front-wheel brake |
| 33 | front-wheel wheel cylinder |
| 40 | rear-wheel brake |
| 43 | rear-wheel wheel cylinder |
| 51 | front-wheel braking operation element |
| 52 | front-wheel master cylinder |
| 53 | front-wheel brake fluid channel |
| 61 | rear-wheel braking operation element |
| 62 | rear-wheel master cylinder |
| 63 | rear-wheel brake fluid channel |
| 70 | brake hydraulic-pressure control device |
| 71 | electric actuator |
| 72 | braking operation condition detection unit |
| 73 | drive signal generation unit |
| 74 | vehicle condition quantity detection unit |
| 80 | brake hydraulic-pressure control device |
| 81 | electric actuator |
| 82 | braking operation condition detection unit |
| 83 | drive signal generation unit |
| 84 | vehicle condition quantity detection unit |

Claims

1.   A straddled vehicle (1) comprising:

a vehicle-body frame (2);

a front wheel (3) and a rear wheel (4) supported by the vehicle-body frame (2);

a front-wheel brake (30) provided on the front wheel (3) and including a front-wheel wheel cylinder (33) for generating a braking force for the front wheel (3);

a front-wheel braking operation element (51) operable by a rider;

a front-wheel master cylinder (52) configured to be actuated by an operation of the front-wheel braking operation element (51);

a front-wheel brake fluid channel (53) connecting the front-wheel master cylinder (52) and the front-wheel wheel cylinder (33);

a rear-wheel brake (40) provided on the rear wheel (4) and including a rear-wheel wheel cylinder (43) for generating a braking force for the rear wheel (4);

a rear-wheel braking operation element (61) operable by the rider;

a rear-wheel master cylinder (62) configured to be actuated by an operation of the rear-wheel braking operation element (61);

a rear-wheel brake fluid channel (63) connecting the rear-wheel master cylinder (62) and the rear-wheel wheel cylinder (43); and

at least one of a front-wheel brake hydraulic-pressure control device (70) and a rear-wheel brake hydraulic-pressure control device (80),

the front-wheel brake fluid channel (53) being independent from the rear-wheel brake fluid channel (63),

the front-wheel brake hydraulic-pressure control device (70) including:

a front-wheel electric actuator (71) configured to be driven electrically, and provided on the front-wheel brake fluid channel (53) for controlling a brake hydraulic pressure acting on the front-wheel wheel cylinder (33);

a front-wheel braking operation condition detection unit (72) configured to detect an operation condition of the front-wheel braking operation element (51);

a front-wheel drive signal generation unit (73) configured to define a correlation between the operation condition of the front-wheel braking operation element (51) and a drive signal for the front-wheel electric actuator (71), and generate a drive signal for driving the front-wheel electric actuator (71) based on the operation condition of the front-wheel braking operation element (51) detected by the front-wheel braking operation condition detection unit (72); and

a front-wheel vehicle condition quantity detection unit (74) configured to detect a vehicle condition quantity relating to a condition of the vehicle (1),

wherein the front-wheel drive signal generation unit (73) includes a front-wheel correlation changing unit (73b), wherein the front-wheel correlation changing unit (73b) is configured to, when the front-wheel braking operation element (51) has been operated in a direction for increasing braking force and the vehicle condition quantity detected by the front-wheel vehicle condition quantity detection unit (74) has exceeded a first front-wheel threshold, change the correlation between the operation condition of the front-wheel braking operation element (51) and the drive signal for the front-wheel electric actuator (71) so as to reduce an amount of increase in the brake hydraulic pressure acting on the front-wheel wheel cylinder (33) in relation to an amount of change per unit time in the operation amount of the front-wheel braking operation element (51),

the rear-wheel brake hydraulic-pressure control device (80) including:

a rear-wheel electric actuator (81) configured to be driven electrically, and provided on the rear-wheel brake fluid channel (63) for controlling a brake hydraulic pressure acting on the rear-wheel wheel cylinder (43);

a rear-wheel braking operation condition detection unit (82) configured to detect an operation condition of the rear-wheel braking operation element (61);

a rear-wheel drive signal generation unit (83) configured to define a correlation between the operation condition of the rear-wheel braking operation element (61) and a drive signal for the rear-wheel electric actuator (81), and generate a drive signal for driving the rear-wheel electric actuator (81) based on the operation condition of the rear-wheel braking operation element (61) detected by the rear-wheel braking operation condition detection unit (82); and

a rear-wheel vehicle condition quantity detection unit (84) configured to detect a vehicle condition quantity relating to a condition of the vehicle (1),

wherein the rear-wheel drive signal generation unit (83) includes a rear-wheel correlation changing unit (83b), wherein the rear-wheel correlation changing unit (83b) is configured to, when the rear-wheel braking operation element (61) has been operated in a direction for increasing braking force and the vehicle condition quantity detected by the rear-wheel vehicle condition quantity detection unit (84) has exceeded a first rear-wheel threshold, change the correlation between the operation condition of the rear-wheel braking operation element (61) and the drive signal for the rear-wheel electric actuator (81) so as to reduce an amount of increase in the brake hydraulic pressure acting on the rear-wheel wheel cylinder (43) in relation to an amount of change per unit time in the operation amount of the rear-wheel braking operation element (61).

2. The straddled vehicle (1) according to claim 1, wherein the front-wheel correlation changing unit (73b) is configured to set, to a first front-wheel increase amount, the amount of increase in the brake hydraulic pressure acting on the front-wheel wheel cylinder (33) in relation to the amount of change per unit time in the operation amount of the front-wheel braking operation element (51) when the front-wheel braking operation element (51) has been operated in the direction for increasing braking force and the vehicle condition quantity detected by the front-wheel vehicle condition quantity detection unit (74) has exceeded the first front wheel threshold,
the front-wheel correlation changing unit (73b) is configured to set, to a second front-wheel increase amount smaller than the first front-wheel increase amount, the amount of increase in the brake hydraulic pressure acting on the front-wheel wheel cylinder (33) in relation to the amount of change per unit time in the operation amount of the front-wheel braking operation element (51) when the front-wheel braking operation element (51) has been operated in the direction for increasing braking force and the vehicle condition quantity detected by the front-wheel vehicle condition quantity detection unit (74) has exceeded a second front-wheel threshold larger than the first front-wheel threshold,
the rear-wheel correlation changing unit (83b) is configured to set, to a first rear-wheel increase amount, the amount of increase in the brake hydraulic pressure acting on the rear-wheel wheel cylinder (43) in relation to the amount of change per unit time in the operation amount of the rear-wheel braking operation element (61) when the rear-wheel braking operation element (61) has been operated in the direction for increasing braking force and the vehicle condition quantity detected by the rear-wheel vehicle condition quantity detection unit (84) has exceeded the first rear wheel threshold, and
the rear-wheel correlation changing unit (83b) is configured to set, to a second rear-wheel increase amount smaller than the first rear-wheel increase amount, the amount of increase in the brake hydraulic pressure acting on the rear-wheel wheel cylinder (43) in relation to the amount of change per unit time in the operation amount of the rear-wheel braking operation element (61) when the rear-wheel braking operation element (61) has been operated in the direction for increasing braking force and the vehicle condition quantity detected by the rear-wheel vehicle condition quantity detection unit (84) has exceeded a second rear-wheel threshold larger than the first rear-wheel threshold.

3. The straddled vehicle (1) according to claim 1 or 2, wherein the vehicle condition quantity detected by the front-wheel vehicle condition quantity detection unit (74) includes a slip amount or slip ratio of the front wheel (3), and
the vehicle condition quantity detected by the rear-wheel vehicle condition quantity detection unit (84) includes a slip amount or slip ratio of the rear wheel (4).

4. The straddled vehicle (1) according to any one of claims 1 to 3, wherein the front-wheel braking operation condition detection unit (72) is configured to detect a brake hydraulic pressure generated by the front-wheel master cylinder (52),
the front-wheel brake hydraulic-pressure control device (70) is configured to drive the front-wheel electric actuator (71) in such a manner that the brake hydraulic pressure acting on the front-wheel wheel cylinder (33) becomes equal to or smaller than the brake hydraulic pressure of the front-wheel master cylinder (52) detected by the front-wheel braking operation condition detection unit (72) when the front-wheel braking operation element (51) has been operated in the direction for increasing braking force and the vehicle condition quantity detected by the front-wheel vehicle condition quantity detection unit (74) has exceeded the first front-wheel threshold,
the rear-wheel braking operation condition detection unit (82) is configured to detect a brake hydraulic pressure generated by the rear-wheel master cylinder (62), and
the rear-wheel brake hydraulic-pressure control device (80) is configured to drive the rear-wheel electric actuator (81) in such a manner that the brake hydraulic pressure acting on the rear-wheel wheel cylinder (43) becomes equal to or smaller than the brake hydraulic pressure of the rear-wheel master cylinder (62) detected by the rear-wheel braking operation condition detection unit (82) when the rear-wheel braking operation element (61) has been operated in the direction for increasing braking force and the vehicle condition quantity detected by the rear-wheel vehicle condition quantity detection unit (84) has exceeded the first rear-wheel threshold.

5. The straddled vehicle (1) according to any one of claims 1 to 4, wherein the front-wheel brake hydraulic-pressure control device (70) is configured to drive the front-wheel electric actuator (71) so as to reduce the brake hydraulic pressure acting on the front-wheel wheel cylinder (33) when the front-wheel braking operation element (51) has been operated in the direction for increasing braking force and the vehicle condition quantity detected by the front-wheel vehicle condition quantity detection unit (74) has reached a third front-wheel threshold larger than the first front-wheel threshold, and

the rear-wheel brake hydraulic-pressure control device (80) is configured to drive the rear-wheel electric actuator (81) so as to reduce the brake hydraulic pressure acting on the rear-wheel wheel cylinder (43) when the rear-wheel braking operation element (61) has been operated in the direction for increasing braking force and the vehicle condition quantity detected by the rear-wheel vehicle condition quantity detection unit (84) has reached a third rear-wheel threshold larger than the first rear-wheel threshold.

6. The straddled vehicle (1) according to any one of claims 1 to 5, further comprising:
a bar handle (20) supporting at least one of the front-wheel braking operation element (51) and the rear-wheel braking operation element (61) and configured to be capable of changing a direction of the front wheel (3).

**Patentansprüche**

1. Ein rittlings zu fahrendes Fahrzeug (1), das folgende Merkmale aufweist:

einen Fahrzeugkarosserierahmen (2);
ein Vorderrad (3) und ein Hinterrad (4), die durch den Fahrzeugkarosserierahmen (2) getragen sind;
eine Vorderradbremse (30), die an dem Vorderrad (3) vorgesehen ist und einen Vorderrad-Radzylinder (33) zum Erzeugen einer Bremskraft für das Vorderrad (3) umfasst;
ein Vorderradbremsbetätigungselement (51), das durch einen Fahrer betätigbar ist;
einen Vorderradhauptzylinder (52), der dazu konfiguriert ist, durch eine Betätigung des Vorderradbremsbetätigungselements (51) ausgelöst zu werden;
einen Vorderradbremsfluidkanal (53), der den Vorderradhauptzylinder (52) und den Vorderrad-Radzylinder (33) verbindet;
eine Hinterradbremse (40), die an dem Hinterrad (4) vorgesehen ist und einen Hinterrad-Radzylinder (43) zum Erzeugen einer Bremskraft für das Hinterrad (4) umfasst;
ein Hinterradbremsbetätigungselement (61), das durch den Fahrer betätigbar ist;
einen Hinterradhauptzylinder (62), der dazu konfiguriert ist, durch eine Betätigung des Hinterradbremsbetätigungselements (61) ausgelöst zu werden;
einen Hinterradbremsfluidkanal (63), der den Hinterradhauptzylinder (62) und den Hinterrad-Radzylinder (43) verbindet; und
zumindest entweder eine Vorderradbremshydraulikdrucksteuervorrichtung (70) und/oder eine Hinterradbremshydraulikdrucksteuervorrichtung (80),
wobei der Vorderradbremsfluidkanal (53) von dem Hinterradbremsfluidkanal (63) unabhängig ist,
wobei die Vorderradbremshydraulikdrucksteuervorrichtung (70) folgende Merkmale aufweist:

ein elektrisches Vorderradstellglied (71), das dazu konfiguriert ist, elektrisch angetrieben zu werden, und das an dem Vorderradbremsfluidkanal (53) vorgesehen ist, um einen Bremshydraulikdruck, der auf den Vorderrad-Radzylinder (33) einwirkt, zu steuern;
eine Vorderradbremsbetätigungszustandsdetektionseinheit (72), die dazu konfiguriert ist, einen Betätigungszustand des Vorderradbremsbetätigungselements (51) zu detektieren;
eine Vorderradantriebssignalerzeugungseinheit (73), die dazu konfiguriert ist, eine Korrelation zwischen dem Betätigungszustand des Vorderradbremsbetätigungselements (51) und einem Antriebssignal für das elektrische Vorderradstellglied (71) zu definieren und auf der Basis des Betätigungszustands des Vorderradbremsbetätigungselements (51), die durch die Vorderradbremsbetätigungszustandsdetektionseinheit (72) detektiert wird, ein Antriebssignal zum Antreiben des elektrischen Vorderradstellglieds (71) zu erzeugen; und
eine Vorderradfahrzeugzustandsquantitätsdetektionseinheit (74), die dazu konfiguriert ist, eine Fahrzeugzustandsquantität, die auf einen Zustand des Fahrzeugs (1) bezogen ist, zu detektieren,
wobei die Vorderradantriebssignalerzeugungseinheit (73) eine Vorderradkorrelationsänderungseinheit (73b) umfasst, wobei die Vorderradkorrelationsänderungseinheit (73b) dazu konfiguriert ist, dann, wenn das Vorderradbremsbetätigungselement (51) in einer Richtung zum Erhöhen einer Bremskraft betätigt wurde und die durch die Vorderradfahrzeugzustandsquantitätsdetektionseinheit (74) detektierte Fahrzeugzustandsquantität eine erste Vorderradschwelle überschritten hat, die Korrelation zwischen dem Betätigungszustand des Vorderradbremsbetätigungselements (51) und dem Antriebssignal für das elektrische Vorderradstellglied (71) zu verändern, um ein Ausmaß einer Zunahme des auf den Vorderrad-Radzylinder (33) einwirkenden Bremshydraulikdrucks bezüglich eines Änderungsausmaßes pro Zeiteinheit des Betätigungsausmaßes des Vorderradbremsbetätigungselements (51) zu reduzieren,

wobei die Hinterradbremshydraulikdrucksteuervorrichtung (80) folgende Merkmale aufweist:

ein elektrisches Hinterradstellglied (81), das dazu konfiguriert ist, elektrisch angetrieben zu werden, und das an dem Hinterradbremsfluidkanal (63) vorgesehen ist, um einen Bremshydraulikdruck, der auf den Hinterrad-Radzylinder (43) einwirkt, zu steuern;

eine Hinterradbremsbetätigungszustandsdetektionseinheit (82), die dazu konfiguriert ist, einen Betätigungszustand des Hinterradbremsbetätigungselements (61) zu detektieren;

eine Hinterradantriebssignalerzeugungseinheit (83), die dazu konfiguriert ist, eine Korrelation zwischen dem Betätigungszustand des Hinterradbremsbetätigungselements (61) und einem Antriebssignal für das elektrische Hinterradstellglied (81) zu definieren und auf der Basis des Betätigungszustands des Hinterradbremsbetätigungselements (61), die durch die Hinterradbremsbetätigungszustandsdetektionseinheit (82) detektiert wird, ein Antriebssignal zum Antreiben des elektrischen Hinterradstellglieds (81) zu erzeugen; und

eine Hinterradfahrzeugzustandsquantitätsdetektionseinheit (84), die dazu konfiguriert ist, eine Fahrzeugzustandsquantität, die auf einen Zustand des Fahrzeugs (1) bezogen ist, zu detektieren,

wobei die Hinterradantriebssignalerzeugungseinheit (83) eine Hinterradkorrelationsänderungseinheit (83b) umfasst, wobei die Hinterradkorrelationsänderungseinheit (83b) dazu konfiguriert ist, dann, wenn das Hinterradbremsbetätigungselement (61) in einer Richtung zum Erhöhen einer Bremskraft betätigt wurde und die durch die Hinterradfahrzeugzustandsquantitätsdetektionseinheit (84) detektierte Fahrzeugzustandsquantität eine erste Hinterradschwelle überschritten hat, die Korrelation zwischen dem Betätigungszustand des Hinterradbremsbetätigungselements (61) und dem Antriebssignal für das elektrische Hinterradstellglied (81) zu verändern, um ein Ausmaß einer Zunahme des auf den Hinterrad-Radzylinder (43) einwirkenden Bremshydraulikdrucks bezüglich eines Änderungsausmaßes pro Zeiteinheit bezüglich des Betätigungsausmaßes des Hinterradbremsbetätigungselements (61) zu reduzieren.

2. Das rittlings zu fahrende Fahrzeug (1) gemäß Anspruch 1, bei dem die Vorderradkorrelationsänderungseinheit (73b) dazu konfiguriert ist, das Ausmaß der Zunahme des auf den Vorderrad-Radzylinder (33) einwirkenden Bremshydraulikdrucks bezüglich des Änderungsausmaßes pro Zeiteinheit des Betätigungsausmaßes des Vorderradbremsbetätigungselements (51) auf ein erstes Vorderradzunahmeausmaß einzustellen, wenn das Vorderradbremsbetätigungselement (51) in der Richtung zum Erhöhen einer Bremskraft betätigt wurde und die durch die Vorderradfahrzeugzustandsquantitätsdetektionseinheit (74) detektierte Fahrzeugzustandsquantität die erste Vorderradschwelle überschritten hat,

die Vorderradkorrelationsänderungseinheit (73b) dazu konfiguriert ist, das Ausmaß der Zunahme des auf den Vorderrad-Radzylinder (33) einwirkenden Bremshydraulikdrucks bezüglich des Änderungsausmaßes pro Zeiteinheit des Betätigungsausmaßes des Vorderradbremsbetätigungselements (51) auf ein zweites Vorderradzunahmeausmaß, das geringer ist als das erste Vorderradzunahmeausmaß, einzustellen, wenn das Vorderradbremsbetätigungselement (51) in der Richtung zum Erhöhen einer Bremskraft betätigt wurde und die durch die Vorderradfahrzeugzustandsquantitätsdetektionseinheit (74) detektierte Fahrzeugzustandsquantität eine zweite Vorderradschwelle, die größer ist als die erste Vorderradschwelle, überschritten hat,

die Hinterradkorrelationsänderungseinheit (83b) dazu konfiguriert ist, das Ausmaß der Zunahme des auf den Hinterrad-Radzylinder (43) einwirkenden Bremshydraulikdrucks bezüglich des Änderungsausmaßes pro Zeiteinheit des Betätigungsausmaßes des Hinterradbremsbetätigungselements (61) auf ein erstes Hinterradzunahmeausmaß einzustellen, wenn das Hinterradbremsbetätigungselement (61) in der Richtung zum Erhöhen einer Bremskraft betätigt wurde und die durch die Hinterradfahrzeugzustandsquantitätsdetektionseinheit (84) detektierte Fahrzeugzustandsquantität die erste Hinterradschwelle überschritten hat,

die Hinterradkorrelationsänderungseinheit (83b) dazu konfiguriert ist, das Ausmaß der Zunahme des auf den Hinterrad-Radzylinder (43) einwirkenden Bremshydraulikdrucks bezüglich des Änderungsausmaßes pro Zeiteinheit des Betätigungsausmaßes des Hinterradbremsbetätigungselements (61) auf ein zweites Hinterradzunahmeausmaß, das geringer ist als das erste Hinterradzunahmeausmaß, einzustellen, wenn das Hinterradbremsbetätigungselement (61) in der Richtung zum Erhöhen einer Bremskraft betätigt wurde und die durch die Hinterradfahrzeugzustandsquantitätsdetektionseinheit (84) detektierte Fahrzeugzustandsquantität eine zweite Hinterradschwelle, die größer ist als die erste Hinterradschwelle, überschritten hat.

3. Das rittlings zu fahrende Fahrzeug (1) gemäß Anspruch 1 oder 2, bei dem die durch die Vorderradfahrzeugzustandsquantitätsdetektionseinheit (74) detektierte Fahrzeugzustandsquantität ein Schlupfausmaß oder ein Schlupfverhältnis des Vorderrades (3) umfasst, und
die durch die Hinterradfahrzeugzustandsquantitätsdetektionseinheit (84) detektierte Fahrzeugzustandsquantität ein Schlupfausmaß oder ein Schlupfverhältnis des Hinterrades (4) umfasst.

4. Das rittlings zu fahrende Fahrzeug (1) gemäß einem der Ansprüche 1 bis 3, bei dem die Vorderradbremsbetätigungszustandsdetektionseinheit (72) dazu konfiguriert ist, einen durch den Vorderradhauptzylinder (52) erzeugten Bremshydraulikdruck zu detektieren,
die Vorderradbremshydraulikdrucksteuervorrichtung (70) dazu konfiguriert ist, das elektrische Vorderradstellglied (71) derart anzutreiben, dass der auf den Vorderrad-Radzylinder (33) einwirkende Bremshydraulikdruck gleich dem oder kleiner als der Bremshydraulikdruck des Vorderradhauptzylinders (52) wird, der durch die Vorderradbremsbetätigungszustandsdetektionseinheit (72) detektiert wird, wenn das Vorderradbremsbetätigungselement (51) in der Richtung zum Erhöhen der Bremskraft betätigt wurde und die durch die Vorderradfahrzeugzustandsquantitätsdetektionseinheit (74) detektierte Fahrzeugzustandsquantität die erste Vorderradschwelle überschritten hat,
die Hinterradbremsbetätigungszustandsdetektionseinheit (82) dazu konfiguriert ist, einen durch den Hinterradhauptzylinder (62) erzeugten Bremshydraulikdruck zu detektieren,
die Hinterradbremshydraulikdrucksteuervorrichtung (80) dazu konfiguriert ist, das elektrische Hinterradstellglied (81) derart anzutreiben, dass der auf den Hinterrad-Radzylinder (43) einwirkende Bremshydraulikdruck gleich dem oder kleiner als der Bremshydraulikdruck des Hinterradhauptzylinders (62) wird, der durch die Hinterradbremsbetätigungszustandsdetektionseinheit (82) detektiert wird, wenn das Hinterradbremsbetätigungselement (61) in der Richtung zum Erhöhen der Bremskraft betätigt wurde und die durch die Hinterradfahrzeugzustandsquantitätsdetektionseinheit (84) detektierte Fahrzeugzustandsquantität die erste Hinterradschwelle überschritten hat.

5. Das rittlings zu fahrende Fahrzeug (1) gemäß einem der Ansprüche 1 bis 4, bei dem die Vorderradbremshydraulikdrucksteuervorrichtung (70) dazu konfiguriert ist, das elektrische Vorderradstellglied (71) anzutreiben, um den auf den Vorderrad-Radzylinder (33) einwirkenden Bremshydraulikdruck zu reduzieren, wenn das Vorderradbremsbetätigungselement (51) in der Richtung zum Erhöhen der Bremskraft betätigt wurde und die durch die Vorderradfahrzeugzustandsquantitätsdetektionseinheit (74) detektierte Fahrzeugzustandsquantität eine dritte Vorderradschwelle erreicht hat, die größer ist als die erste Vorderradschwelle, und
die Hinterradbremshydraulikdrucksteuervorrichtung (80) dazu konfiguriert ist, das elektrische Hinterradstellglied (81) anzutreiben, um den auf den Hinterrad-Radzylinder (43) einwirkenden Bremshydraulikdruck zu reduzieren, wenn das Hinterradbremsbetätigungselement (61) in der Richtung zum Erhöhen der Bremskraft betätigt wurde und die durch die Hinterradfahrzeugzustandsquantitätsdetektionseinheit (84) detektierte Fahrzeugzustandsquantität eine dritte Hinterradschwelle erreicht hat, die größer ist als die erste Hinterradschwelle.

6. Das rittlings zu fahrende Fahrzeug (1) gemäß einem der Ansprüche 1 bis 5, das ferner folgendes Merkmal aufweist:
einen Lenker (20), der zumindest entweder das Vorderradbremsbetätigungselement (51) und/oder das Hinterradbremsbetätigungselement (61) trägt und dazu konfiguriert ist, in der Lage zu sein, eine Richtung des Vorderrads (3) zu ändern.

**Revendications**

1. Véhicule à selle (1), comprenant:

un châssis de carrosserie de véhicule (2);
une roue avant (3) et une roue arrière (4) supportées par le châssis de carrosserie de véhicule (2);
un frein de roue avant (30) prévu sur la roue avant (3) et comportant un cylindre de roue avant (33) destiné à générer une force de freinage pour la roue avant (3);
un élément d'actionnement de frein de roue avant (51) actionnable par un conducteur;
un cylindre principal de roue avant (52) configuré pour être actionné par un fonctionnement de l'élément d'actionnement de frein de roue avant (51);
un canal à fluide de frein de roue avant (53) connectant le cylindre principal de roue avant (52) et le cylindre de roue avant (33);
un frein de roue arrière (40) prévu sur la roue arrière (4) et comportant un cylindre de roue arrière (43) destiné à générer une force de freinage pour la roue arrière (4);
un élément d'actionnement de frein de roue arrière (61) actionnable par le conducteur;
un cylindre principal de roue arrière (62) configuré pour être actionné par un fonctionnement de l'élément d'actionnement de frein de roue arrière (61);

un canal à fluide de frein de roue arrière (63) connectant le cylindre principal de roue arrière (62) et le cylindre de roue arrière (43); et

au moins l'un parmi un dispositif de commande de pression hydraulique de frein de roue avant (70) et un dispositif de commande de pression hydraulique de frein de roue arrière (80),

le canal à fluide de frein de roue avant (53) étant indépendant du canal à fluide de frein de roue arrière (63),

le dispositif de commande de pression hydraulique de frein de roue avant (70) comportant:

un actionneur électrique de roue avant (71) configuré pour être entraîné électriquement, et prévu sur le canal à fluide de frein de roue avant (53) pour commander une pression hydraulique de frein agissant sur le cylindre de roue avant (33);

une unité de détection de condition de fonctionnement de frein de roue avant (72) configurée pour détecter une condition de fonctionnement de l'élément d'actionnement de frein de roue avant (51);

une unité de génération de signal de commande de roue avant (73) configurée pour définir une corrélation entre la condition de fonctionnement de l'élément d'actionnement de frein de roue avant (51) et un signal de commande pour l'actionneur électrique de roue avant (71), et pour générer un signal de commande pour commander l'actionneur électrique de roue avant (71) sur base de la condition de fonctionnement de l'élément d'actionnement de frein de roue avant (51) détectée par l'unité de détection de condition de fonctionnement de frein de roue avant (72); et

une unité de détection de quantité d'état de véhicule à la roue avant (74) configurée pour détecter une quantité d'état de véhicule relative à un état du véhicule (1),

dans lequel l'unité de génération de signal de commande de roue avant (73) comporte une unité de modification de corrélation de roue avant (73b), dans lequel l'unité de modification de corrélation de roue avant (73b) est configurée pour modifier, lorsque l'élément d'actionnement de frein de roue avant (51) a été actionné dans une direction pour augmenter la force de freinage et que la quantité d'état de véhicule détectée par l'unité de détection de quantité d'état de véhicule à la roue avant (74) a excédé un premier seuil de roue avant, la corrélation entre la condition de fonctionnement de l'élément d'actionnement de frein de roue avant (51) et le signal de commande pour l'actionneur électrique de roue avant (71) de manière à réduire une quantité d'augmentation de la pression hydraulique de frein agissant sur le cylindre de roue avant (33) par rapport à une quantité de modification par unité de temps de la quantité de fonctionnement de l'élément d'actionnement de frein de roue avant (51),

le dispositif de commande de pression hydraulique de frein de roue arrière (80) comportant:

un actionneur électrique de roue arrière (81) configuré pour être entraîné électriquement, et prévu sur le canal à fluide de frein de roue arrière (63) pour commander une pression hydraulique de frein agissant sur le cylindre de roue arrière (43);

une unité de détection de condition de fonctionnement de frein de roue arrière (82) configurée pour détecter une condition de fonctionnement de l'élément d'actionnement de frein de roue arrière (61);

une unité de génération de signal de commande de roue arrière (83) configurée pour définir une corrélation entre la condition de fonctionnement de l'élément d'actionnement de frein de roue arrière (61) et un signal de commande pour l'actionneur électrique de roue arrière (81), et pour générer une commande pour commander l'actionneur électrique de roue arrière (81) sur base de la condition de fonctionnement de l'élément d'actionnement de frein de roue arrière (61) détectée par l'unité de détection de condition de fonctionnement de frein de roue arrière (82); et

une unité de détection de quantité d'état de véhicule à la roue arrière (84) configurée pour détecter une quantité d'état de véhicule relative à un état du véhicule (1),

dans lequel l'unité de génération de signal de commande de roue arrière (83) comporte une unité de modification de corrélation de roue arrière (83b), dans lequel l'unité de modification de corrélation de roue arrière (83b) est configurée pour modifier, lorsque l'élément d'actionnement de frein de roue arrière (61) a été actionné dans une direction pour augmenter la force de freinage et que la quantité d'état de véhicule détectée par l'unité de détection de quantité d'état de véhicule de roue arrière (84) a excédé un premier seuil de roue arrière, la corrélation entre la condition de fonctionnement de l'élément d'actionnement de frein de roue arrière (61) et le signal de commande pour l'actionneur électrique de roue arrière (81) de manière à réduire une quantité d'augmentation de la pression hydraulique de frein agissant sur le cylindre de roue arrière (43) par rapport à une quantité de modification par unité de temps de la quantité de fonctionnement de l'élément d'actionnement de frein de roue arrière (61).

**2.** Véhicule à selle (1) selon la revendication 1, dans lequel l'unité de modification de corrélation de roue avant (73b) est configurée pour régler à une première quantité d'augmentation de roue avant la quantité d'augmentation de la pression hydraulique de frein agissant sur la cylindre de roue avant (33) par rapport à la quantité de modification par unité de temps de la quantité de fonctionnement de l'élément d'actionnement de frein de roue avant (51) lorsque l'élément d'actionnement de frein de roue avant (51) a été actionné dans la direction pour augmenter la force de freinage et que la quantité d'état de véhicule détectée par l'unité de détection de quantité d'état de véhicule à la roue avant (74) a excédé le premier seuil de roue avant,
l'unité de modification de corrélation de roue avant (73b) est configurée pour régler à une deuxième quantité d'augmentation de roue avant, inférieure à la première quantité d'augmentation de roue avant, la quantité d'augmentation de la pression hydraulique de freinage agissant sur le cylindre de roue avant (33) par rapport à la quantité de modification par unité de temps de la quantité de fonctionnement de l'élément d'actionnement de frein de la roue avant (51) lorsque l'élément d'actionnement de frein de la roue avant (51) a été actionné dans la direction pour augmenter la force de freinage et que la quantité d'état de véhicule détectée par l'unité de détection de quantité d'état de véhicule à la roue avant (74) a excédé un deuxième seuil de roue avant supérieur au premier seuil de roue avant,
l'unité de modification de corrélation de roue arrière (83b) est configurée pour régler à une première quantité d'augmentation de roue arrière la quantité d'augmentation de la pression hydraulique de frein agissant sur le cylindre de roue arrière (43) par rapport à la quantité de modification par unité de temps de la quantité de fonctionnement de l'élément d'actionnement de frein de roue arrière (61) lorsque l'élément d'actionnement de frein de roue arrière (61) a été actionné dans la direction pour augmenter la force de freinage et que la quantité d'état de véhicule détectée par l'unité de détection de quantité d'état de véhicule à la roue arrière (84) a excédé le premier seuil de roue arrière, et
l'unité de modification de corrélation de roue arrière (83b) est configurée pour régler à une deuxième quantité d'augmentation de roue arrière, inférieure à la première quantité d'augmentation de roue arrière, la quantité d'augmentation de la pression hydraulique de frein agissant sur le cylindre de roue arrière (43) par rapport à la quantité de modification par unité de temps de la quantité de fonctionnement de l'élément d'actionnement de frein de roue arrière (61) lorsque l'élément d'actionnement de frein de roue arrière (61) a été actionné dans la direction pour augmenter la force de freinage et que la quantité d'état de véhicule de roue arrière (84) a excédé un deuxième seuil de roue arrière supérieur au premier seuil de roue arrière.

**3.** Véhicule à selle (1) selon la revendication 1 ou 2, dans lequel la quantité d'état de véhicule détectée par l'unité de détection de quantité d'état de véhicule de roue avant (74) comporte une quantité de glissement ou un rapport de glissement de la roue avant (3), et
la quantité d'état de véhicule détectée par l'unité de détection de quantité d'état de véhicule de roue arrière (84) comporte une quantité de glissement ou un rapport de glissement de la roue arrière (4).

**4.** Véhicule à selle (1) selon l'une quelconque des revendications 1 à 3, dans lequel l'unité de détection de condition de fonctionnement de frein de roue avant (72) est configurée pour détecter une pression hydraulique de frein générée par le cylindre principal de roue avant (52),
le dispositif de commande de pression hydraulique de frein de roue avant (70) est configuré pour commander l'actionneur électrique de roue avant (71) de sorte que la pression hydraulique de frein agissant sur le cylindre de roue avant (33) devienne égale ou inférieure à la pression hydraulique de frein du cylindre principal de roue avant (52) détectée par l'unité de détection de condition de fonctionnement de frein de roue avant (72) lorsque l'élément d'actionnement de frein de roue avant (51) a été actionné dans la direction pour augmenter la force de freinage et que la quantité d'état de véhicule détectée par l'unité de détection de quantité d'état de véhicule à la roue avant (74) a excédé le premier seuil de roue avant,
l'unité de détection de condition de fonctionnement de frein de roue arrière (82) est configurée pour détecter une pression hydraulique de frein générée par le cylindre principal de roue arrière (62), et
le dispositif de commande de pression hydraulique de frein de roue arrière (80) est configuré pour commander l'actionneur électrique de roue arrière (81) de sorte que la pression hydraulique de frein agissant sur le cylindre de roue arrière (43) devienne égale ou inférieure à la pression hydraulique de frein du cylindre principal de roue arrière (62) détectée par l'unité de détection de condition de fonctionnement de frein de roue arrière (82) lorsque l'élément d'actionnement de frein de roue arrière (61) a été actionné dans la direction pour augmenter la force de freinage et que la quantité d'état de véhicule détectée par l'unité de détection de quantité d'état de véhicule à la roue arrière (84) a excédé le premier seuil de roue arrière.

**5.** Véhicule à selle (1) selon l'une quelconque des revendications 1 à 4, dans lequel le dispositif de commande de pression hydraulique de frein de roue avant (70) est configuré pour commander l'actionneur électrique de roue avant (71) de manière à réduire la pression hydraulique de frein agissant sur le cylindre de roue avant (33) lorsque l'élément de fonctionnement de frein de roue avant (51) a été actionné dans la direction pour augmenter la force de freinage et que la quantité d'état de véhicule détectée par l'unité de détection de quantité d'état de véhicule à la roue avant (74) a atteint un troisième seuil de roue avant supérieur au premier seuil de roue avant, et

le dispositif de commande de pression hydraulique de frein de roue arrière (80) est configuré pour commander l'actionneur électrique de roue arrière (81) de manière à réduire la pression hydraulique de frein agissant sur le cylindre de roue arrière (43) lorsque l'élément d'actionnement de frein de roue arrière (61) a été actionné dans la direction pour augmenter la force de freinage et que la quantité d'état de véhicule détectée par l'unité de détection de quantité d'état de véhicule à la roue arrière (84) a atteint un troisième seuil de roue arrière supérieur au premier seuil de roue arrière.

6. Véhicule à selle (1) selon l'une quelconque des revendications 1 à 5, comprenant par ailleurs:

une poignée de guidon (20) supportant au moins l'un parmi l'élément d'actionnement de frein de roue avant (51) et l'élément d'actionnement de frein de roue arrière (61) et configurée pour être à même de changer la direction de la roue avant (3).

FIG.1

FIG.2

FIG.3A

FIG.3B

## FIG.4

(a)

SOLID LINE:
VEHICLE-BODY VELOCITY

WHEEL VELOCITY
BROKEN LINE:
INVENTIVE CONTROL
DOTTED LINE:
KNOWN ABS CONTROL

POINT AT WHICH
FIRST SMALL
SLIP OCCURS

POINT AT WHICH SECOND
SMALL SLIP OCCURS

THRESHOLD FOR
ABS ACTIVATION

(b)

SMALL SLIP SIGNAL
(DETECTION NEAR
TIRE-LOCK LIMIT)

POINT AT
WHICH SMALL
SLIP OCCURS

(c)

BRAKE HYDRAULIC
PRESSURE OF
FRONT-WHEEL
WHEEL CYLINDER
BROKEN LINE:
INVENTIVE CONTROL
SOLID LINE:
KNOWN ABS CONTROL

POINT AT WHICH BRAKE
OPERATION STARTS

TIME PERIOD WHERE
NORMAL ABS STARTS

TIME PERIOD WHERE ABS UNDER
INVENTIVE CONTROL STARTS

(d)

BRAKE HYDRAULIC
PRESSURE OF
FRONT-WHEEL
MASTER CYLINDER

(e)

SLIP RATIO

Th3f
Th2f
Th1f

K1    K2    K3

t1  t2  t3   t4  t5  t6

30

FIG.5

FIG.6

FIG.7

DIRECTION IN WHICH
VEHICLE ADVANCES

SLIP
ANGLE

Wx

Vx

Vy

Wy

F

L        R

B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5335512 B